# EUROPÄISCHE PATENTSCHRIFT

(11) **EP 4 208 277 B1**
(45) Veröffentlichungstag und Bekanntmachung des Hinweises auf die Patenterteilung: **17.07.2024**
(21) Anmeldenummer: 21773034.0
(22) Anmeldetag: 01.09.2021
(51) Int. Cl.: C02F 1/28, B01D 29/11, B01D 29/96, B01D 35/027, C02F 1/00, B01D 27/08, B01D 35/153, A47J 31/60

(54) **WASSERTANK MIT FILTERPATRONE**
WATER TANK WITH FILTER CARTRIDGE
RÉSERVOIR D'EAU DOTÉ D'UNE CARTOUCHE FILTRANTE

(30) Priorität: 03.09.2020 DE 102020123004; 22.03.2021 DE 102021107068
(43) Veröffentlichungstag der Anmeldung: 12.07.2023
(73) Patentinhaber: ACLARIS GmbH, Lindau Zweigniederlassung Rebstein, 9445 Rebstein (CH)
(72) Erfinder: WALLERSTORFER, Kurt, 5204 Strasswalchen (AT)
(74) Vertreter: Otten, Roth, Dobler & Partner mbB Patentanwälte
(86) Internationale Anmeldenummer: PCT/EP2021/074161
(87) Internationale Veröffentlichungsnummer: WO 2022/049143

(56) Entgegenhaltungen:
- EP-A1- 2 138 078
- WO-A2-2008/017492
- DE-A1- 102014 223 648
- US-A1- 2010 025 317

## Beschreibung

Die Erfindung betrifft einen Wassertank mit Filterpatrone nach dem Oberbegriff des Anspruchs 1.

In wasserführenden Haushaltsmaschinen mit einem Wassertank, insbesondere in Getränkemaschinen, wie Kaffeemaschinen, Teemaschinen, etc., werden regelmäßig Filterpatronen eingesetzt, um die Wasserqualität entsprechend der vorgesehenen Anwendung zu verbessern. Häufig werden in solchen Filterpatronen Filtermedien zur Wasserenthärtung, wie z.B. Ionentauscherharz, oder zur Geschmacksverbesserung, wie z.B. Aktivkohle, verwendet. Auch die dosierte Zugabe von Zusatzstoffen, z.B. für die Gesundheit oder Geschmacksverbesserung, wie die Zugabe von Mineralien oder Vitaminen, etc., wird bereits in Kombination mit Filtermedien vorgesehen.

Wassertanks derartiger Maschinen nach dem Stand der Technik weisen regelmäßig am Tankboden Tankanschlusselemente mit einer ringförmige Tankdichtfläche zum dichten Anschluss eines Filteranschlusselementes der für einen solchen Wassertank vorgesehenen Filterpatrone auf, die eine Tankdurchgangsöffnung im Tankboden zum Durchfluss des Wassers aus der Filterpatrone und dem Wassertank zur Haushaltsmaschine umschließen.

Solche Wassertanks und Filterpatronen sind beispielsweise in den Druckschriften DE 10 2004 049 877 A1, EP 1 867 606 A1 und DE 197 17 054 C2 beschrieben.

Um zu verhindern, dass ungeeignete Filterpatronen zum Einsatz kommen, wurden die Tankanschlusselementen bereits mit Kodierungselementen versehen, so dass nur zu diesen Kodierungselementen passende Filterpatronen zum Einsatz kommen können.

Die Druckschrift US 2010/0025317 A1 offenbart einen leitungsgebundenen Filter mit einer Einlassleitung und einer Auslassleitung, die mit einem Gehäuse verbunden sind. In dem Gehäuse befindet sich eine Filterkartusche, deren Filtermedium zylinderförmig angeordnet ist. Am Auslass des Gehäuses ist ein Sitz mit Kodierstrukturen angeordnet, während am Auslass der Kartusche eine passende Endkappe vorhanden ist.

Die Druckschrift EP 2 138 078 A1 offenbart eine Anschlussvorrichtung zur dauerhaften Verbindung mit einem Tankboden, der zur Verbindung mit dem Tankboden taschenförmige Verbindungselemente aufweist. Diese werden mit tankseitigen Fixiermitteln so verbunden, dass sie nicht mehr zerstörungsfrei vom Tank lösbar sind. In diese Anschlussvorrichtung ist sodann eine Filterpatrone austauschbar einzusetzen, wobei die Anschlussvorrichtung und die Filterpatrone sechskantförmige Kodierstrukturen aufweisen.

In bestimmten Ausführungsformen, die beispielsweise in den Druckschriften WO 2008/017492 A2, EP 2 433 906 B1, EP 2 063 972 B1, EP 2 049 220 B1, EP 2 049 221 B1 und EP 2 049 218 B1 offenbart sind, ist eine polygonale Form der Filterdichtflächen und der Tankdichtflächen zur Kodierung vorgesehen, so dass mit der Dichtung selbst neben der Dichtfunktion auch eine zusätzliche Kodierungsfunktion ausgeübt wird.

Diese Ausführungen haben den Nachteil, dass durch die eckige Kontur die Dichtfunktion gegenüber einer runden Kontur schwieriger zu realisieren ist.

Aufgabe der Erfindung ist es daher, einen solchen Wassertank und eine solche Filterpatrone derart weiterzubilden, dass die genannte Kodierungsfunktion ohne derartige Nachteile ermöglicht wird.

Diese Aufgabe wird ausgehend von einem Wassertank und einer Filterpatrone nach dem Oberbegriff des Anspruchs 1 durch dessen kennzeichnende Merkmale gelöst.

Im Folgenden werden allgemein dem Wassertank zuzuordnende Elemente mit dem zuordnenden Wortanfang "Tank" und der Filterpatrone zuzuordnende Elemente mit dem zuordnenden Wortanfang "Filter" versehen. Merkmale vorteilhafter Ausführungen und Weiterbildungen der Erfindung werden im Folgenden so beschrieben, dass sie nicht zwingend vorhanden sind, jedoch vorhanden sein können.

Die Filterpatrone eines erfindungsgemäßen Wassertanks ist mit einem Filtergehäuse versehen, dessen Wandung eine Gehäuseinnenseite von einer Gehäuseaußenseite trennt, wobei eine offene Filtereinlassöffnung für den Wassereintritt aus dem Wasservorrat ohne weitere Anschlusselemente vorgesehen ist, die dementsprechend beim Einsatz in einem Wassertank in Betriebsposition der Filterpatrone mit dem Tankinneren verbunden ist. Bezogen auf die Strömungsrichtung im Betrieb ist im Anschluss an die Filtereinlassöffnung eine Vorrichtung zur Wasserleitung im Inneren des Filtergehäuses vorgesehen, die wenigstens eine, wenigstens ein Filtermedium aufweisende Filterkammer umfasst und in einer Filterauslassöffnung zum Absaugen von Wasser aus der Filterpatrone endet. Ein Filteranschlusselement ist mit einem ringförmigen Filteranschlussstutzen vorgesehen, der eine ringförmige Filterdichtfläche für den dichten Anschluss der Filterpatrone an einer Tankdichtfläche im Wassertank aufweist.

Eine solche Filterpatrone unterscheidet sich durch diese Ausgestaltung von Filterpatronen von Filtervorrichtungen, deren Gehäuse mit druckfesten Anschlüssen dicht an Wasserleitungen eines Wassernetzes angeschlossen und so in das Wassernetz eingebunden werden.

Eine erfindungsgemäße Filterpatrone weist eine Filterdichtfläche auf, deren Verlauf entlang dem Umfang des ringförmigen Filteranschlussstutzens einen variierenden Radius gegenüber einer zentralen Achse aufweist, so dass die Filterdichtfläche radiale Ausbuchtungen und/oder radiale Einbuchtungen umfasst, wobei die Ausbuchtungen und/oder Einbuchtungen einen runden Verlauf aufweisen, so dass Ecken oder Kanten vermieden werden.

Hierdurch bestehen weitere Möglichkeiten der Kodierung. Diese Form der Filterdichtfläche passt zu einer korrespondierenden Form einer Tankdichtfläche, wobei durch die im Verlauf des Umfangs von außen nach innen und umgekehrt wechselnden Krümmungen das Aufspannen oder Eindrücken einer in der Form nicht angepassten Formdichtung auf oder in eine feste tankseitige Anlagefläche erschwert oder ganz verhindert ist. Die radialen Ausbuchtungen und/oder Einbuchtungen bilden die Form einer Ringfeder nach, deren Umfang federnd geweitet oder zusammengedrückt werden kann. Dabei verbessert die Federwirkung auch die Dichtwirkung, da durch den Federdruck die Filterdichtfläche an die zugehörige Tankdichtfläche flächig angedrückt wird. Die Filterdichtfläche und die Tankdichtfläche können auch zum Fixieren der Filterpatrone dienen und bilden dann ein Filterfixierfläche oder eine Tankfixierfläche. Diese Fixierfunktion im Zusammenwirken der Filterdichtfläche und der Tankdichtfläche wird durch eine solche Federwirkung verbessert.

Die federnde Verformbarkeit der Filterdichtfläche kann dadurch verbessert werden, dass der die Filterdichtfläche aufweisende ringförmige Filteranschlussstutzen des Filteranschlusselementes im Bereich der Filterdichtfläche eine ringförmige Wand mit einer Wandinnenseite und einer Wandaußenseite aufweist, die parallel oder zueinander geneigt verlaufen. Je nachdem ob der Anschlussstutzen auf eine Tankfixierfläche aufgesteckt oder in eine Tankdichtfläche eingesteckt wird, umfasst oder bildet entweder die Wandaußenseite oder die Wandinnenseite der ringförmigen Wand die Filterdichtfläche.

Da in dieser Ausbildung die der Filterdichtfläche gegenüberliegende Seite der Wand die gleiche Form mit entsprechend größerem oder kleinerem Umfang aufweist, ist diese Wand insgesamt als Ringfeder ausgebildet. Die ringförmige Wand bildet dann eine Ringfeder mit parallelen oder zueinander geneigten Umfangsseiten.

Der die Filterdichtfläche aufweisende ringförmige Filteranschlussstutzen des Filteranschlusselementes kann wenigstens im Bereich der Filterdichtfläche aus einem bei Betriebstemperatur gegenüber einem Elastomer formfesteren Kunststoff bestehen. Durch diese Festigkeit ist der Filteranschlussstutzen der Filterpatrone in der Lage, ohne beeinträchtigende Formveränderung einen Anpressdruck auf eine tankseitige Tankdichtfläche auszuüben, um den dichten Anschluss herzustellen.

Ein solcher formfester Kunststoff ist fester als ein Elastomer, so dass mit dem Filteranschlussstutzen eine Elastomerdichtung auf der Wassertankseite verformbar ist. Hierdurch kann ein Anpressdruck erzeugt werden. Durch eine Verformung einer Elastomerdichtung können auch eine oder mehrere weitere Funktionen der Elastomerdichtung bewirkt werden, beispielsweise eine mechanische oder hydraulische Funktion, wie eine Fixierfunktion, eine Ventilfunktion oder dergleichen.

Dies ist beispielsweise dann von Vorteil, wenn die Filterdichtfläche eine von einer zentralen Achse der Filterauslassöffnung wegweisenden Außenfläche des ringförmigen Filteranschlussstutzens des Filteranschlusselementes bildet. Ein solcher Filteranschlussstutzen ist trotz der wechselnden umfangseitigen Krümmungen in der Lage, beim Einstecken in eine wassertankseitige Wassertankdichtung mit dementsprechend radial nach innen weisender Tankdichtfläche im Wesentlichen über den gesamten Umfang einen Anpressdruck nach außen auszuüben, um die gewünschte Dichtwirkung und/oder Fixierwirkung zu erzielen.

In einer Weiterbildung der Erfindung ist die Anordnung der Ausbuchtungen und Einbuchtungen der Filterdichtfläche drehsymmetrisch über den Umfang ausgebildet. Dadurch ergibt sich eine gleichmäßig über den Umfang verteilte Rückstellkraft der Ringfeder mit einer stabileren Fixierung und Dichtung der Filterpatrone in montierter Position. Eine drehsymmetrische Ausbildung der Filterdichtfläche über den Umfang ergibt sich dann, wenn die Ausbuchtungen und/oder Einbuchtungen periodisch um eine Kreislinie oszillierend ausgebildet sind. Dadurch sind verschiedene Winkelpositionen der Filterpatrone möglich, wodurch deren Anschluss erleichtert wird. Zudem können auch weitere technische Funktionen winkelabhängig vorgesehen werden.

Eine stabilere Fixierung der Filterpatrone in der Einbauposition wird dadurch erreicht, dass die Anordnung der Ausbuchtungen und Einbuchtungen der Tankdichtfläche und/oder der Filterdichtfläche mit gleichen Winkeln über den Umfang ausgebildet ist. Die so gebildete Ringfeder kann sich so gleichmäßig über den Umfang sowohl im Bereich der Ausbuchtungen als auch im Bereich der Einbuchtungen verformen.

Die Dichtwirkung der Filterdichtfläche mit der Tankdichtfläche wird durch einen runden Verlauf der Ausbuchtungen und/oder Einbuchtungen verbessert, so dass Ecken oder Kanten vermieden werden. Durch den runden Verlauf unter Vermeidung von Ecken oder Kanten im Bereich der Dichtflächen wird, beispielsweise gegenüber Polygonformen wie im Stand der Technik, die Dichtfunktion verbessert. Auch eine Verbesserung der mechanischen Klemmung und damit der Fixierung ist durch den variierenden Radius beispielsweise auch gegenüber einer Kreisform möglich.

Die Ausbuchtungen und Einbuchtungen der Filterfixierfläche können eine Wellenform entlang einer Kreislinie bilden, wobei die Wellenform aus einer alternierenden Abfolge von konvexen, die Ausbuchtungen bildenden Kreissegmenten und konkaven, die Einbuchtungen bildenden Kreissegmenten besteht. Durch den einer Kreislinie folgenden Verlauf ergibt sich eine radial gerichtete Federwirkung.

Die Federwirkung der Ringfeder kann weiter verbessert werden, wenn die konkaven und konvexen Kreissegmente in Wendepunkten beim Übergang zwischen konkaven und konvexen Krümmungen tangential verbunden sind.

In einer bestimmten Ausführung der Erfindung ist die Bogenlänge der konvexen Kreissegmente länger, als die Bogenlänge der konkaven Kreissegmente. Der überstrichenen Winkel der konvexen Kreissegmente ist also größer als der überstrichene Winkel der konkaven Kreissegmente. Dadurch verläuft der tangentiale Übergang zwischen den Krümmungen schräg gegenüber einem Mittelkreis der Ringfeder, so dass in den Übergängen keine radial nach innen oder außen gerichtete Kraft bei der Verformung entsteht.

In einer bestimmten Ausführungsform weisen die konvexen und die konkaven Kreissegmente den gleichen Segmentradius auf. Dadurch ergibt sich innerhalb der Segmente eine vergleichbare Kraftverteilung bei der Verformung.

Die Kreissegmente können so angeordnet werden, dass die konvexen und die konkaven Kreissegmente innerhalb eines äußeren Hüllkreises und außerhalb eines inneren Hüllkreises liegen, wobei die Kreismittelpunkte der konvexen Kreissegmente innerhalb des inneren Hüllkreises und die Kreismittelpunkte der konkaven Kreismittelpunkte außerhalb des äußeren Hüllkreises liegen. Diese Form ergibt einen flachen Verlauf gegenüber den Hüllkreisen bzw. einer Mittellinie zwischen den Hüllkreisen verlaufende Kreissegmente, wodurch das Weiten oder Schrumpfen der Ringfeder erleichtert wird.

Eine gute Funktion hat sich dann gezeigt, wenn der Radius des inneren Hüllkreises zwischen 5% und 15% des Radius des äußeren Hüllkreises beträgt.

Weiterhin hat sich als vorteilhaft erwiesen, wenn der Radius der konvexen und/oder konkaven Kreissegmente zwischen 20% und 35% des Radius des äußeren Hüllkreises beträgt.

Der Federwirkung eines solchen Federringes kommt es weiterhin entgegen, wenn die Wandstärke zwischen der Wandaußenseite und der hierzu parallel oder geneigt verlaufenden Wandinnenseite zwischen 7% bis 10 % des Radius des äußeren Hüllkreises beträgt.

Zudem hat sich ein Verlauf dann als vorteilhaft gezeigt, wenn die Wendepunkte zwischen den Krümmungen der konkaven und konvexen Kreissegmente näher an dem inneren Hüllkreis als an dem äußeren Hüllkreis liegen.

Die Filterdichtfläche kann eine von einer zentralen Achse der Filterauslassöffnung wegweisende Außenfläche des ringförmigen Filteranschlussstutzens des Filteranschlusselementes bilden. Ein solcher Filteranschlussstutzen ist trotz der wechselnden umfangseitigen Krümmungen in der Lage, beim Einstecken in eine wassertankseitige Öffnung mit dementsprechend radial nach innen weisender Tankfixierfläche im Wesentlichen über den gesamten Umfang einen federnden Anpressdruck nach außen auszuüben, um die gewünschte Dicht- und/oder Fixierwirkung zu erzielen. Umgekehrt kann auch beim Aufstecken auf einen wassertankseitigen Tankanschlussstutzen mit dementsprechend radial nach außen weisender Tankdichtfläche durch eine radial nach innen weisende Filterdichtfläche im Wesentlichen über den gesamten Umfang ein federnder Anpressdruck nach innen ausgeübt werden, um die gewünschte Dicht- und/oder Fixierwirkung zu erzielen.

In einer besonderen Ausführungsform der Erfindung ist sowohl auf der Innenseite als auch auf der Außenseite des der Filteranschlussstutzens eine Filterfixierfläche vorgesehen, von denen eine oder beide zugleich eine Filterdichtfläche bilden. Ein solcher Filteranschlussstutzen kann in einen tankseitigen Ringschlitz eingeführt werden, dessen Seitenwände jeweils eine Tankfixierfläche und/oder Tankdichtfläche bilden.

Eine sehr gut funktionierende Konstellation hat sich beispielsweise gezeigt, wenn sechs Ausbuchtungen und sechs Einbuchtungen entlang einer Kreislinie vorgesehen sind, die einen Durchmesser kleiner 3cm aufweist.

Die Filtereinlassöffnung der Filterpatrone kann auf der Außenseite des Filteranschlussstutzens als ringförmige Sieböffnung ausgebildet werden, wodurch die Filterpatrone im Wassertank für das darin befindliche Wasser offen ist.

Auch die Filterauslassöffnung der Filterpatrone kann als ringförmige Sieböffnung ausgebildet sein.

Der die Filterdichtfläche aufweisende ringförmige Filteranschlussstutzen des Filteranschlusselementes kann wenigstens im Bereich der Filterdichtfläche eine Wand mit einer parallel oder geneigt zur einer Wandinnenseite verlaufenden, die Filterdichtfläche umfassenden oder bildenden Wandaußenseite aufweisen.

Eine Verbesserung der Filterpatrone ergibt sich dann, wenn innerhalb des Filteranschlussstutzens eine Führungsstruktur zur Führung und Aufnahme eines wassertankseitigen Zentrierelementes vorgesehen ist. Damit kann die Filterpatrone beim Einsetzen in den zugehörigen Wassertank in axialer Richtung ausgerichtet und in der Betriebsposition in dieser Ausrichtung fixiert werden.

Weist die Führungsstruktur wenigstens eine in axialer Richtung verlaufende, also parallel zur zentralen Achse verlaufende Führungsnut zur Aufnahme wenigstens einer Führungsrippe des Wassertankseitigen Zentrierelementes auf, so kann über diese Führungsstruktur in Wechselwirkung mit dem zugehörigen wassertankseitigen Zentrierelementes die Filterpatrone mit der axialen Bewegung beim Einsetzen in den Wassertank in wenigstens eine Winkelpositionen geführt und dort zusätzlich fixiert werden.

Um eine Führung und Fixierung in mehreren Winkelpositionen vorzusehen, kann die Führungsstruktur hierzu mehrere umfangsseitig verteilte Führungsnuten aufweisen.

Eine gute Führung der Filterpatrone in die gewünschte Winkelposition ergibt sich dann, wenn die Wandung der Führungsnuten derart gerundet ist, dass die Nutenbreite bezogen auf die Betriebsstellung sich von unten nach oben verjüngt. Die Führung der Filterpatrone kann zudem verbessert werden, wenn die Wandung der Führungsnuten derart gerundet ist, dass die Nutenbreite sich radial von innen nach außen verjüngt. In Kombination der beiden sich verjüngenden Nutenformen ergibt sich eine Art Trichtereffekt für eine in eine solche Nut eintretende Rippe eines Wassertankseitigen Zentrierelementes.

Die genannten Nutenformen können beispielsweise mittels Innenwölbungen in einer die Führungsnuten verbindenden Wandung der Führungsstruktur ausgebildet werden.

Die erfindungsgemäße Form der Filterdichtfläche kann auch zur Verbesserung der Fixierung der Filterpatrone dienen, indem die Filterdichtfläche zugleich als Filterfixierfläche vorgesehen wird. Die erfindungsgemäße Form der als Filterfixierfläche vorgesehenen Filterdichtfläche erleichtert eine Verformung des Filteranschlussstutzens im Bereich der Filterfixierfläche, da die radialen Ausbuchtungen und/oder Einbuchtungen die Form einer Ringfeder ausbilden, deren Umfang federnd geweitet oder zusammengedrückt werden kann. Durch eine solche durch den variierenden Radius erleichterte Verformung ist eine Verbesserung der mechanischen Klemmung und damit der Fixierung beispielsweise im Vergleich mit einer Kreisform oder einer Polygonform möglich.

Die federnde Verformbarkeit der Filterfixierfläche kann dadurch verbessert werden, dass der die Filterfixierfläche aufweisende ringförmige Filteranschlussstutzen des Filteranschlusselementes im Bereich der Filterfixierfläche eine ringförmige Wand mit einer Wandinnenseite und einer Wandaußenseite aufweist, die parallel oder zueinander geneigt verlaufen. Je nachdem ob der Anschlussstutzen auf eine Tankfixierfläche aufgesteckt oder in eine Tankfixierfläche eingesteckt wird, umfasst oder bildet entweder die Innenfläche oder die Außenfläche der ringförmigen Wand die Filterfixierfläche.

Da in dieser Ausbildung die der Filterfixierfläche gegenüberliegende Seite der Wand die gleiche Form mit entsprechend größerem oder kleinerem Umfang aufweist, ist diese Wand insgesamt als Ringfeder ausgebildet. Die ringförmige Wand bildet dann eine Ringfeder mit parallelen oder zueinander geneigten Umfangsseiten.

Weiterhin kann der ringförmige Filteranschlussstutzen des Filteranschlusselementes eine Außen- und/oder eine Innenwand aufweist, die gegenüber der Vertikalen abgeschrägt ist, so dass die Außenwand und die Innenwand bezogen auf die Betriebsposition der Filterpatrone von oben nach unten zusammenlaufen. Hierdurch ergibt sich eine Führungshilfe, die das Einführen des Anschlussstutzens in einen Spalt zwischen zwei passend geformten tankseitigen Flächenerleichtert, wobei die tankseitigen Flächen wenigstens teilweise eine innere und/oder äußere Tankdichtfläche bilden können.

Dementsprechend kann die abgeschrägte Außenwand eine äußere und/oder die abgeschrägte Innenwand eine innere Filterdichtfläche aufweisen, um mit der korrespondierenden Tankdichtfläche einen dichtenden Formschluss einzugehen.

Der zur o.a. Filterpatrone korrespondierende Wassertank für eine Haushaltsmaschine weist einen Tankboden auf, wobei am Tankboden eine ringförmige Tankdichtfläche zum dichten Anschluss der Filterpatrone vorgesehen ist, die eine Tankdurchgangsöffnung zum Durchfluss des Wassers aus der Filterpatrone durch die Wandung des Tankbodens zur Haushaltsmaschine umschließt. Zur vorteilhaften Wechselwirkung mit der oben beschriebenen Filterdichtfläche weist auch der Verlauf der Tankdichtfläche entlang ihrem Umfang einen variierenden Radius gegenüber einer zentralen Achse aufweist, so dass die Tankdichtfläche radiale Einbuchtungen und/oder radiale Ausbuchtungen umfasst.

Hierdurch ergeben sich die oben für die Filterpatrone aufgezeigten Möglichkeiten der Kodierung auf Seiten des Wassertanks. Durch diese Form der Tankdichtfläche ist eine Filterpatrone mit korrespondierender Filterdichtfläche wie oben beschrieben im Wassertank verwendbar. Für die Anpassung von Filterpatrone und tankseitigem Anschluss kann also durch diese Formgebung auch die Auswahl der Materialien und deren Anordnung maßgeblich und somit Bestandteil der Kodierung sein. Dabei können Ecken oder Kanten im Bereich der Dichtflächen vermieden werden, wodurch beispielsweise gegenüber Polygonformen aus dem Stand der Technik die Dichtfunktion verbessert wird. Auch eine Verbesserung der mechanischen Klemmung und damit der Fixierung ist durch den variierenden Radius beispielsweise gegenüber einer Kreisform möglich.

Die Tankdichtfläche wird passend zur o.a. Filterdichtfläche so ausgebildet, dass die ringförmige Tankdichtfläche eine zur zentralen Achse der Tankdurchgangsöffnung hinweisende Innenfläche eines Tankanschlusselementes bildet. Eine solche Tankdichtfläche passt zur Form des filterseitigen Filteranschlussstutzens, so dass dieser in das Tankanschlusselement eingesteckt werden kann. Trotz der wechselnden umfangseitigen Krümmungen beim Einstecken des Filteranschlussstutzens in das Tankanschlusselement mit der radial nach innen weisenden Tankdichtfläche ist so im Wesentlichen über den gesamten Umfang die gewünschte Dichtwirkung zu erzielen.

Für die Verwendung einer Filterpatrone, bei der die Einbuchtungen und/oder Ausbuchtungen der Filterdichtfläche wie o.a. periodisch um eine Kreislinie oszillierend ausgebildet sind, werden auch die Einbuchtungen und/oder Ausbuchtungen Tankdichtfläche passend zur Filterdichtfläche periodisch um eine Kreislinie oszillierend ausgebildet. Ebenso können zur Anpassung an eine entsprechend geformte Filterdichtfläche die Einbuchtungen und/oder Ausbuchtungen der Tankdichtfläche einen runden Verlauf aufweisen.

Zur Anpassung an eine entsprechend geformte Filterdichtfläche können auch auf Seiten der Tankdichtfläche sechs Einbuchtungen und sechs Ausbuchtungen entlang einer Kreislinie mit einem Durchmesser kleiner 3cm vorgesehen sind.

Mit den einzelnen Anpassungen der Tankdichtfläche an eine entsprechend geformte Filterdichtfläche können auch die jeweiligen Vorteile, die hierzu bezüglich der Filterpatrone oben genannt sind, erzielt werden.

Das ringförmige Tankanschlusselement kann eine ringförmige Elastomerdichtung umfassen, in der die radialen Ausbuchtungen und/oder radialen Einbuchtungen vorgeformt angebracht sind. Ein solches Tankanschlusselement ist insbesondere in Verbindung mit einer Filterpatrone von Vorteil, deren ringförmiger Filteranschlussstutzen im Bereich der Filterdichtfläche aus einem bei Betriebstemperatur formfesten Kunststoff besteht. Die Elastomerdichtung gibt dem formfesten Kunststoff auf Seiten der Filterpatrone beim Einstecken der Filterpatrone nach.

Die Elastomerdichtung weist bevorzugt an der Innenseite der radialen Ausbuchtungen und/oder radialen Einbuchtungen die gegenüber der Filterpatrone dichtende Tankdichtfläche auf.

Weiterhin ist es von Vorteil, wenn die Tankdichtfläche der Elastomerdichtung einen von oben nach unten zur zentralen Achse hinführenden schrägen Verlauf aufweist. Dieser Verlauf führt dazu, dass die Elastomerdichtung im Verlaufe des Einsteckvorgangs der Filterpatrone zunehmend elastisch nach außen verformt wird und durch die dadurch erzeugte Rückstellkraft ein Anpressdruck entsteht, der für die gewünschte Dichtwirkung sorgt.

Durch eine Verformung einer Elastomerdichtung können neben der Fixierfunktion und der Dichtfunktion auch eine oder mehrere weitere Funktionen bewirkt werden. Dies kann beispielsweise auch eine hydraulische Funktion, wie eine Ventilfunktion oder dergleichen sein.

Für die Verwendung einer Elastomerdichtung ist es von Vorteil, wenn der Tankboden einen Befestigungsring und eine in den Befestigungsring eingefügte Elastomerdichtung umfasst. Der außenliegende Befestigungsring verhindert dann ein Aufweiten der Elastomerdichtung, so dass die elastische Rückstellkraft des Elastomers nahezu vollständig zur Erzeugung des Anpressdrucks zur Verfügung steht.

Um einen Durchfluss zwischen dem Befestigungsring und der Elastomerdichtung zu vermeiden, kann die Elastomerdichtung eine Dichtfläche zum dichten Abschluss der Elastomerdichtung gegenüber dem Befestigungsring aufweisen. Weiterhin kann die Elastomerdichtung eine Dichtfläche zum dichten Abschluss des Befestigungsrings gegenüber dem Tankboden aufweisen.

Vorteilhafter Weise kann auch ein Bypasskanal für ungefiltertes im Tankboden vorgesehen sein, der aus dem Wassertankinnenraum durch den Befestigungsring und durch die Elastomerdichtung verläuft. Hierdurch ist ein Abfluss aus dem Wassertank möglich, wenn keine Filterpatrone eingesetzt ist. Ein solcher Abfluss kann benötigt werden, wenn keine Filterpatrone zur Hand ist oder ein Betrieb ohne Filterpatrone erforderlich ist, z.B. in einem Wartungsbetrieb wie der Reinigung oder Entkalkung der zugehörigen Maschine. Die in solchen Fällen verwendeten Reinigungs- oder Entkalkungsmittel sollten nicht in eine Filterpatrone gelangen.

Der Bypasskanal kann beispielsweise einen Ringspalt in der Elastomerdichtung umfassen, so dass ein über den Umfang verteilter Wasserdurchfluss in die Ausgangsleitung erfolgt.

Bevorzugt umfasst die Elastomerdichtung ein Verschlusselement, mittels dem der Bypasskanal insbesondere durch das Einstecken der Filterpatrone in die Elastomerdichtung verschließbar ist. Dadurch kann der Bypass bei Verwendung einer passenden Filterpatrone ohne weitere Maßnahmen geschlossen werden.

Die Elastomerdichtung kann beispielsweise so geformt sein, dass das Verschlusselement zwei gegenüberliegende ringförmige Dichtflächen im Ringspalt umfasst, durch die der Ringspalt bei Verformung der Elastomerdichtung verschließbar ist. Wird von den beiden ringförmigen Dichtflächen die innere Dichtfläche bei Einsetzen einer Filterpatrone in die Elastomerdichtung aufgeweitet, so ist ein Formschluss mit der äußeren ringförmigen Dichtfläche zu bewirken, wobei der Bypasskanal geschlossen wird.

Der Befestigungsring kann zur einfachen Befestigung des Befestigungsrings und/oder der Elastomerdichtung am Tankboden ein Rastelement zur Verrastung mit dem Tankboden umfassen.

Weiterhin kann am Tankboden ein Zentrierelement zum Einführen in die Filterpatrone vorgesehen sein. Mittels eines solchen Zentrierelementes kann eine Führung beim Einsetzen einer Filterpatrone in die korrekte Betriebsposition erfolgen. Darüber hinaus kann mit dem Zentrierelement durch dessen Formgebung auch eine weitere Kodierung vorgenommen werden, um sicherzustellen, dass nur geeignete Filterpatronen zum Einsatz kommen. Zudem kann mit einem solchen Zentrierelement auch eine Fixierfunktion ausgeübt werden, beispielsweise gegen ein Verdrehen oder Verkippen der Filterpatrone. Das unbeabsichtigte Lösen der Filterpatrone kann auch durch entsprechende Reibungsflächen verhindert werden, so dass bei der Entnahme der Filterpatrone eine entsprechende Reibungskraft zu überwinden ist. Es können am Zentrierelement auch zusätzliche Fixierelemente angebracht werden.

Zur Verbindung des Zentrierelementes mit der Elastomerdichtung kann das Zentrierelement eine Bodenplatte aufweisen, die in einer Aufnahme der Elastomerdichtung liegt und diese randseitig hintergreift. Damit ist das Zentrierelement durch die Elastomerdichtung am Tankboden befestigt.

Sofern ein Bypass von ungefiltertem Wasser vorgesehen ist, kann das Zentrierelement beispielsweise in der Bodenplatte eine Bypassöffnung aufweisen, die zum zentralen Abfluss hin offen ist.

Das Zentrierelement umfasst bevorzugt einen von der Bodenplatte des Zentrierelementes nach oben abstehenden Zentrierdorn, der eine ringförmige Außenfläche aufweist, die einen variierenden Radius gegenüber der zentralen Achse aufweist, so dass die Außenfläche radiale Einbuchtungen und/oder radiale Ausbuchtungen umfasst. Ein solcher Zentrierdorn ist an die Außenkontur der Elastomerdichtung und des Filteranschlussstutzens der zugehörigen Filterpatrone angepasst.

In einer bevorzugten Ausführung der Erfindung sind die Einbuchtungen und/oder Ausbuchtungen der Außenfläche des Zentrierdorns periodisch um eine Kreislinie oszillierend ausgebildet. Diese Ausbildung entspricht der Form einer entsprechenden Elastomerdichtung und lässt somit nur einen Ringspalt mit den Einbuchtungen und/oder Ausbuchtungen frei zum Einführen einer passenden Filterpatrone. Diese Ausgestaltung verhindert also die Verwendung einer anderweitig geformten Anschlussgeometrie innerhalb der Elastomerdichtung und verbessert so die Kodierung. Zudem kann so auf der Innenseite des Filteranschlussstutzens entlang dessen Ausbuchtungen und/oder Einbuchtungen eine Abstützung des Filteranschlussstutzens erfolgen, um die Elastomerdichtung beim Einsetzen der Filterpatrone auf der gegenüberliegenden Außenseite zuverlässig zu verformen.

Die Einbuchtungen und/oder Ausbuchtungen der Außenfläche des Zentrierdorns können zur Anpassung an die Form der Elastomerdichtung und/oder des Filteranschlussstutzens einen runden Verlauf aufweisen.

Bei entsprechenden Verlauf der Elastomerdichtung und/oder des Filteranschlussstutzens sind zur Anpassung des Zentrierdorns in dessen Außenfläche sechs Einbuchtungen und sechs Ausbuchtungen entlang einer Kreislinie mit einem Durchmesser kleiner 3cm vorgesehen.

Oberhalb der Außenfläche mit den Einbuchtungen und/oder Ausbuchtungen wird in einer vorteilhaften Ausführung eine Abstufung und ein nach innen versetzt angeordneter Vorsprung vorgesehen, der weiter in die Filterpatrone eingeführt wird und somit eine größere axiale Führungslänge bietet.

Zur Verhinderung einer axialen Abdichtung auf dieser Abstufung durch eine nicht geeignete Filterpatrone kann oberhalb der ringförmigen Außenfläche wenigstens ein in der Verlängerung der Umfangsfläche nach oben stehender Zahn angeordnet werden.

Oberhalb der ringförmigen Außenfläche kann wenigstens eine zur Tankdurchgangsöffnung führende Durchlassöffnung im Zentrierelement vorgesehen werden, die den Wassereinlass in die Filterpatrone mit dem Wasserauslass verbindet und nur durch eine erfindungsgemäß dichtende Filterpatrone geschlossen ist.

Die axiale Führung und Zentrierung kann dadurch verbessert werden, dass oberhalb der ringförmigen Wand wenigstens eine Führungsrippe im Zentrierelement vorgesehen ist. Neben dieser Führungsrippe oder im Falle mehrerer Führungsrippen zwischen diesen ist dabei ein Wasserdurchfluss möglich. Diese Führungsrippen können beim Aufstecken einer Filterpatrone in den o.a. Führungsnuten geführt werden.

Eine weitere Führungshilfe zum zentrierten Einsetzen der Filterpatrone ergibt sich dadurch, dass die Führungsrippe oder die Führungsrippen an der Oberseite zur zentralen Achse hin abgeschrägt sind. An diesen Abschrägungen kann der Filteranschlussstutzen beim Aufstecken entlanggleiten, bis er in die zentrierte Position gelangt.

Die Elastomerdichtung kann auch eine Dichtfläche zum dichten Abschluss des Befestigungsrings gegenüber dem Tankboden aufweisen, um sicherzustellen, dass aus dem Wassertank kein unerwünschtes Wasser über den Befestigungsring an der Filterpatrone vorbeifließt.

Der Befestigungsring kann zudem ein Rastelement zur Verrastung des Befestigungsrings mit dem Einlegeteil oder mit dem Tankboden umfassen. Hiermit ist die Montage des Befestigungsrings erleichtert. Sofern das Zentrierelement wie o.a. auch durch den Befestigungsring gehalten wird, ist auch dessen Montage und ggf. auch die Montage des darunter befindlichen Wassertankventils vereinfacht.

Die Ausgestaltung des Wassertanks wird vereinfacht, wenn am Tankboden ein zum Tankboden gehörendes Einlegeteil vorgesehen ist, das die Wassertankseitig zum Anschluss der Filterpatrone vorgesehenen Teile umfasst. Durch ein Einlegeteil können verschiedene Anschlussstrukturen bei der gleichen Wassertankgestaltung leicht hergestellt werden, indem unterschiedliche Einlegeteile verwendet werden. Zudem können so verschiedene Anforderungen an die Fertigungstoleranz beim Wassertank und dem jeweiligen Einlegeteil gewählt werden.

Ein solches Einlegeteil kann dabei in vorteilhafter Weise die Elastomerdichtung und/oder den Befestigungsring und/oder das Zentrierelement und/oder wenigstens teilweise den Bypasskanal. Alle wesentlichen Tankanschlussstrukturen lassen sich am Einlegeteil vorsehen, so dass die Anpassung des Wassertanks an eine bestimmte Filterpatrone nur durch Auswahl des passenden Einlegeteils erfolgen kann.

Ein Ausführungsbeispiel der Erfindung ist in der Zeichnung dargestellt und wird anhand der nachfolgenden Figuren näher erläutert.

Im Einzelnen zeigen
Fig.1 eine perspektivische Darstellung eines Tankbodens mit eingesetzter Filterpatrone nach dem Stand der Technik,
Fig.2 eine perspektivische Explosivdarstellung eines Tankbodens mit Zentrierelement und Befestigungsring,
Fig.3 eine perspektivische Darstellung des Tankbodens gemäß Fig. 2 mit eingebautem Zentrierelement und eingebautem Befestigungsring,
Fig.4 eine Draufsicht auf den Tankboden gemäß den Figuren 2 und 3,
Fig.5 eine perspektivische Darstellung des Anschlussbereiches der Filterpatrone von der Seite betrachtet,
Fig.6 eine perspektivische Darstellung des Anschlussbereiches der Filterpatrone von schräg unten betrachtet,
Fig.7 eine perspektivische Darstellung einer auf Höhe des Filteranschlussstutzens aufgeschnittenen Filterpatrone, eingesetzt in einen Tankboden,
Fig.8 eine perspektivische Darstellung einer auf Höhe der Führungsnuten aufgeschnittenen Filterpatrone, eingesetzt in einen Tankboden,
Fig. 9 eine perspektivische Darstellung einer Filterpatrone, eingesetzt in einen Tankboden,
Fig. 10 eine perspektivische Darstellung des Zentrierelementes,
Fig. 11 eine Schnittdarstellung eines Tankbodens ohne Filterpatrone bei geöffnetem Wassertankventil,
Fig. 11a und b zwei Ausschnittvergrößerungen aus Fig. 11 zur Veranschaulichung einer verschließbaren Bypassleitung in der Tankdichtung,
Fig. 12 eine Schnittdarstellung eines Tankbodens gemäß Fig. 11 mit eingesetzter Filterpatrone,
Fig. 12a eine Ausschnittvergrößerung aus Fig. 12 zur Veranschaulichung der geschlossenen Bypassleitung,
Fig. 13 eine schematische Stirnansicht eines erfindungsgemäßen Filteranschlussstutzens,
Fig. 13a eine Ausschnittvergrößerung aus Fig. 13 und
Fig. 14 einen den Anschlussbereich zeigenden Ausschnitt der Filterpatrone zur Veranschaulichung einer Führungshilfe durch Abschrägungen des Anschlussstutzens.

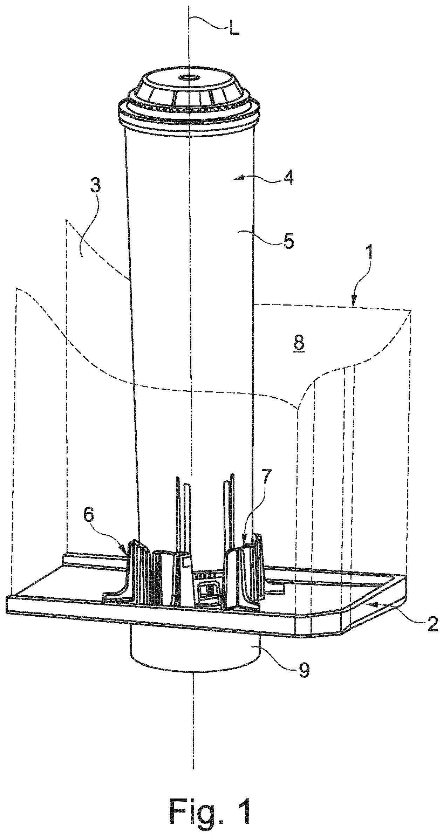

Fig. 1 veranschaulicht die übliche Ausgestaltung eines Wassertanks 1 einer Getränkemaschine, wie einer Kaffeemaschine, z.B. eines Kaffeevollautomaten nach dem Stand der Technik. Der Wassertank 1 umfasst einen Tankboden 2 und mit gestrichelten Linien teilweise dargestellten Wassertankseitenwänden 3. Eine Filterpatrone 4 mit einem Filtergehäuse 5 ist in den Wassertank 1 eingesetzt. Der Anschluss zwischen dem Tankboden 2 und der Filterpatrone 4 wird über Tankanschlusselemente 6 auf Seiten des Wassertanks und filterseitige Filteranschlusselemente 7 realisiert.

Die Filterpatrone 4 befindet sich im Innenraum 8 des Wassertanks 1, d. h. sie steht im Betrieb ganz oder teilweise in dem im Wassertank 1 bevorrateten Wasser. Ein Filteranschlussstutzen 9 des Wassertanks 1 für den Anschluss des Wassertanks 1 an die nicht dargestellte Getränkemaschine steht von der Unterseite des Wassertanks 1 ab.

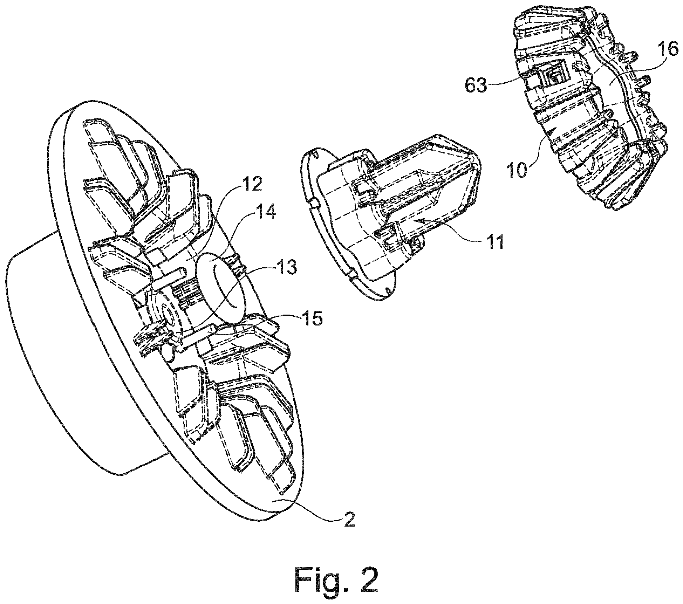

In Fig. 2 ist ein runder Ausschnitt des Tankbodens 2 dargestellt, wobei ein Befestigungsring 10 und ein Zentrierelement 11 zum Einlegen in eine Vertiefung 12 des Tankbodens 2 vorgesehen sind. Ein Tankventilkörper 13 mit einer als O-Ring ausgebildeten Dichtung 14, von dem zwei Pins 15 nach oben abstehen, ist ebenfalls in Fig. 2 zu sehen. Der Befestigungsring 10 trägt weiterhin eine Elastomerdichtung 16.

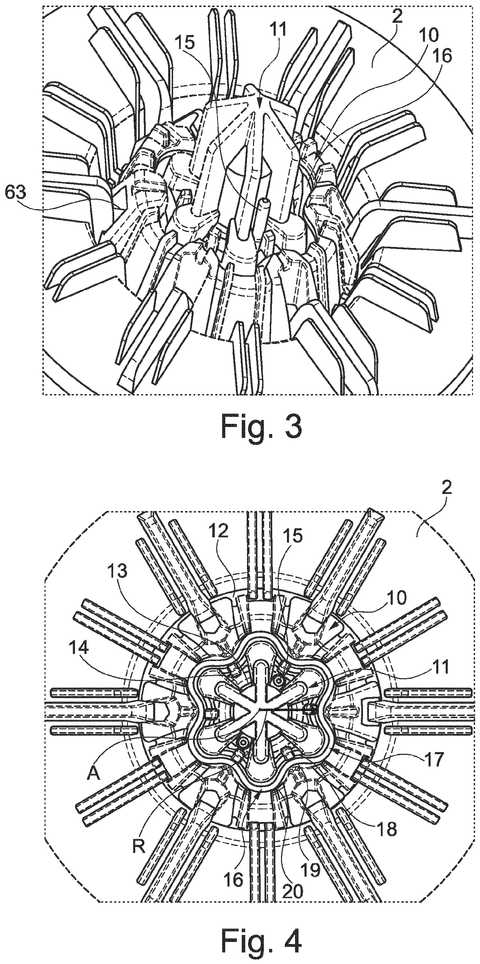

In der Fig. 3 und 4 sind der Befestigungsring 10 und das Zentrierelement 11 in den Tankboden 2 eingebaut. Hier ist erkennbar, dass die Pins 15 das Zentrierelement durchsetzen können und so Kodierelemente für die Kodierung des Wassertanks gegenüber dem zugehörigen Maschinenanschluss bilden, von dem beim Einsetzen des Wassertanks der Tankventilkörper 13 betätigt werden muss. Weiterhin ist in Fig.4 gut sichtbar, dass die die Wassertankdichtung 17 bildende Elastomerdichtung 16 eine Ringdichtung ist, die entlang ihrem Umfang gegenüber einer zentralen Achse A einen variierenden Radius R aufweist, so dass die eine Tankdichtfläche 18 bildende Innenfläche der Wassertankdichtung 17 radiale Einbuchtungen 19 und radiale Ausbuchtungen 20 umfasst. Die erste Tankdichtfläche 18 dient zugleich als erste Tankfixierfläche.

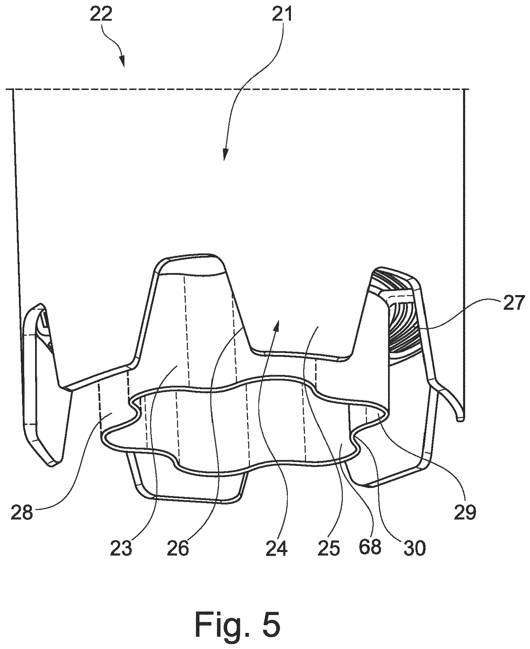

In Fig. 5 ist der Anschlussbereich 21 einer passenden Filterpatrone 22 gezeigt. Ein Filteranschlussstutzen 23 bildet einen inneren Ring der von einem äußeren Ring 24 mit axial verlaufenden Vorsprüngen 25 und Rücksprüngen 26 umgeben ist. Zwischen dem inneren Ring 23 und dem äußeren Ring 24 befindet sich ein ringförmiges Einlasssieb 27, durch das Wasser in die Filterpatrone gelangt. Die Außenfläche 28 und die Innenfläche 68 des Filteranschlussstutzens 23 sind passend zur Tankdichtfläche 18 ebenfalls mit Ausbuchtungen 29 und Einbuchtungen 30 versehen. Die Außenfläche 28 und/oder die Innenfläche 68 des Filteranschlussstutzens 23 können zugleich als Filterfixierfläche dienen.

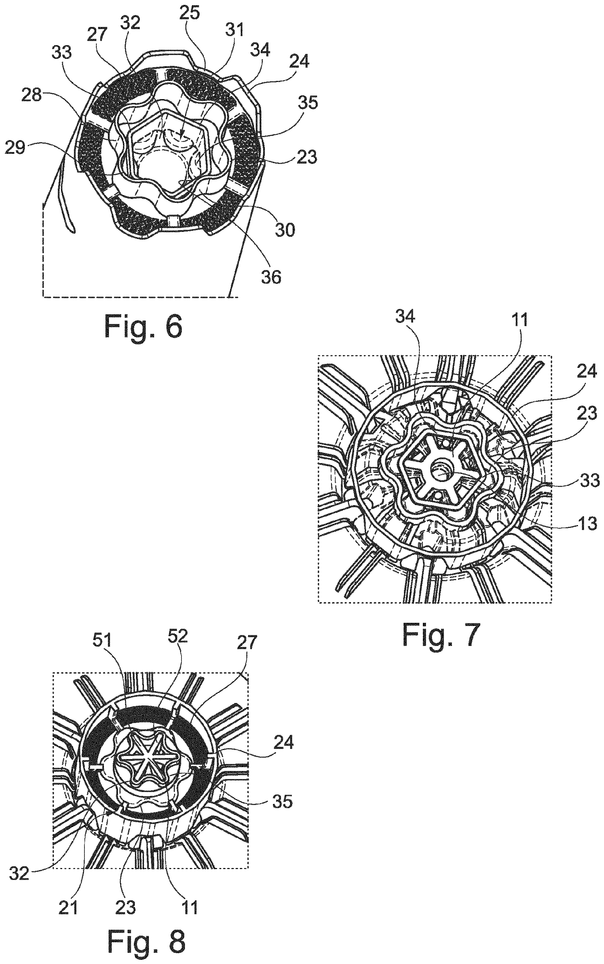

In der Ansicht von Fig. 6 ist neben den oben beschriebenen Teilen des Anschlussbereiches 21 der Filterpatrone 22 die besondere Ausgestaltung einer Führungsstruktur 31 der Filterpatrone 22 zur Aufnahme des Zentrierelementes 11 dargestellt. Die Führungsstruktur weist Führungsnuten 32 auf, die in Flucht zu den Kanten 33 eines Polygonringes 34, vorliegend beispielhaft mit sechs Führungsnuten in Flucht zu sechs Kanten eines sechskantförmigen Ringes liegen. In der Schnittdarstellung mit Blick von oben nach Fig. 7 geht die Schnittebene durch diesen Polygonring 34.

Nach oben in das Innere der Filterpatrone schließen sich Innenwölbungen 35 an die zwischen den Kanten 33 und den Führungsnuten 32 liegen. Die Innenwölbungen 35 bilden die seitlichen Wandungen 36 der Führungsnuten 32 aus. Durch diese gewölbte Form verjüngen sich die Wandungen 36 der Führungsnuten 32 sowohl in axialer Richtung nach oben hin (bezogen auf die Betriebsstellung) und in radiale Richtung von innen nach außen. In der Schnittstelle, mit Blick von oben gemäß Fig. 8 verläuft die Schnittebene auf einer Höhe, in der die Führungsnuten 32 deutlich ausgebildet sind. Zentral schließt sich innen eine Steigleitung 37 an, durch die das in die Filterpatrone 22 eintretenden Wasser nach oben zur Filterstrecke geleitet wird.

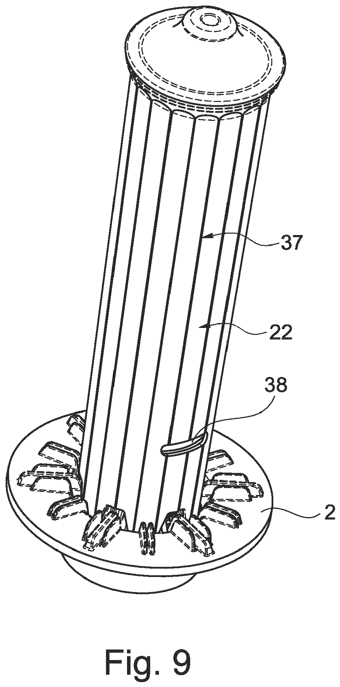

In Fig. 9 ist die gesamte Filterpatrone 22 dargestellt. In einem Filtergehäuse 37, das eine optionale seitliche Dosieröffnung 38 und den beschriebenen bodenseitigen Wasseranschluss aufweist. Die optionale Dosieröffnung 38 ist nur im Falle einer Ausführung der Filterpatrone vorgesehen, die für die Abgabe von Zusatzstoffen, z. B. Mineralien, Vitaminen oder dgl., aus einer im Filtergehäuse 37 untergebrachten Dosierkammer in den Wasservorrat ausgebildet ist. Da eine solche Dosierkammer innerhalb des Filtergehäuses 37 gegenüber der Filterstrecke geschlossen ist, hat diese keine weitere Bedeutung bezüglich der Filtration. Eine erfindungsgemäße Filterpatrone kann also ohne weiteres auch ohne diese Dosierkammer und deren Dosieröffnung 38 ausgebildet sein. In Fig. 9 ist insbesondere die Betriebsposition erkennbar, auf die sich die Angaben oben und unten in dieser Beschreibung beziehen.

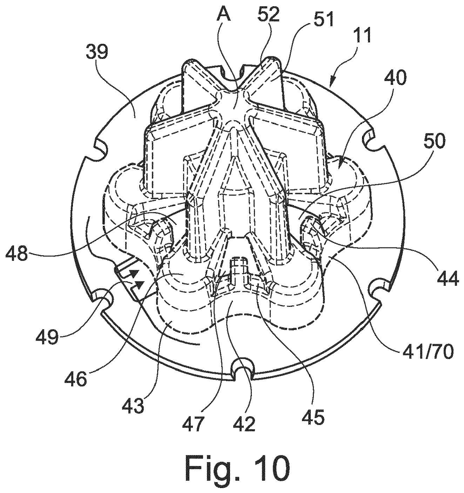

In Fig. 10 ist eine perspektivische Darstellung des Zentrierelementes 11 zu sehen. Das Zentrierelement ist mit einer Bodenplatte 39 versehen, die in montiertem Zustand in einer Aufnahme der Elastomerdichtung liegend diese randseitig hintergreift. Von der Bodenplatte 39 steht ein Zentrierdorn 40 nach oben ab, der eine ringförmige Außenfläche 41 aufweist, die auch eine zweite Tankfixierfläche bildet. Diese Außenfläche 41 weist einen entlang des Umfangs variierenden Radius gegenüber der zentralen Achse A auf, so dass auch diese Außenfläche 41 radiale Einbuchtungen 42 und Ausbuchtungen 43 umfasst. Die Außenfläche 41 ist so an eine entsprechende Form des Filteranschlussstutzens 9 angepasst.

Zur weiteren Anpassung sind auch die Einbuchtungen 42 und Ausbuchtungen 43 dieser Außenfläche 41 periodisch um eine Kreislinie oszillierend ausgebildet und weisen einen runden Verlauf auf. In der dargestellten Ausführung sind entsprechend der Gestaltung der dargestellten Ausführung der Filterpatrone 22 sechs Einbuchtungen 42 und sechs Ausbuchtungen 43 entlang einer Kreislinie mit einem Durchmesser kleiner 3 cm vorgesehen. Bei einer anderen Filterpatrone ist die Anpassung der Außenfläche 41 bzw. der zweiten Tankfixierfläche entsprechend passend abzuändern.

Alle Anpassungen der Außenfläche 41 des Zentrierdorns 11 führen dazu, dass in eingebautem Zustand nur ein ringförmiger Schlitz zwischen der Außenfläche 41 und der Elastomerdichtung 16 zum Einführen des Filteranschlussstutzens 23 offen ist. Dadurch ergibt sich eine weitere Kodierung gegen die Verwendung einer nicht geeigneten Filterpatrone. Zudem ist auf diese Weise eine Abstützung des Filteranschlussstutzens 23 auf dessen Innenseite an der Außenfläche 41 des Zentrierdorns 11 möglich. So kann um der Anpressdruck des Filteranschlussstutzens auf die Elastomerdichtung 16 über die variierende Form entlang der gesamten Umfangsform gleichmäßig erhöht werden.

Oberhalb der ringförmigen Außenfläche ist wenigstens ein nach oben abstehender Zahn 44 vorgesehen. Der eine oder die mehrere Zähne 44 sind auf einer Abstufung 45 des Zentrierdorns 40 angebracht. Weitere, der Form der Außenfläche 41 folgende Erhöhungen 46 gegen über der Abstufung 45 sind mit einem Abstand zu den Zähnen 44 angebracht, so dass zwischen den Zähnen und den Erhöhungen 46 eine Lücke 47 verbleibt. Der Zahn oder die Zähne 44 und/oder die Erhöhungen 46 können den Einsatz einer axialen Dichtung zur Umgehung der Kodierung verhindern. Oberhalb der Außenfläche 41 ist weiterhin eine Durchlassöffnung 48 vorgesehen, die in montiertem Zustand des Zentrierelementes 11 zu einer Tankdurchlassöffnung führt. Durch diese Durchlassöffnung 48 kann das filtrierte Wasser einer Filterpatrone 22 aus dem Wassertank abgeführt werden.

Eine oder mehrere Bodendurchlassöffnungen 49 sind unterhalb der Außenfläche 41 in der Bodenplatte 39 vorgesehen. Durch diese Bodenöffnungen kann ungefiltertes Wasser aus dem Wassertank geleitet werden. Unterhalb der Erhöhungen 46 und innerhalb der die Außenfläche 41 tragenden Wand ergibt sich ein Hohlraum 50 für die Aufnahme des Tankventilkörpers 13.

Oberhalb der ringförmigen Außenfläche 41 sind Führungsrippen 51 vorgesehen, die an ihrer Oberseite wie im dargestellten Ausführungsbeispiel abgeschrägt sein können. Die so gebildeten Führungsschrägen 52 helfen beim Einführen der Führungsrippen 51 in die Führungsnuten 32 einer Filterpatrone 22. In der Schnittdarstellung nach Fig. 4 sind die Führungsschrägen 52 der Führungsrippen 51 in der aufgesteckten Filterpatrone 22 gut zu erkennen.

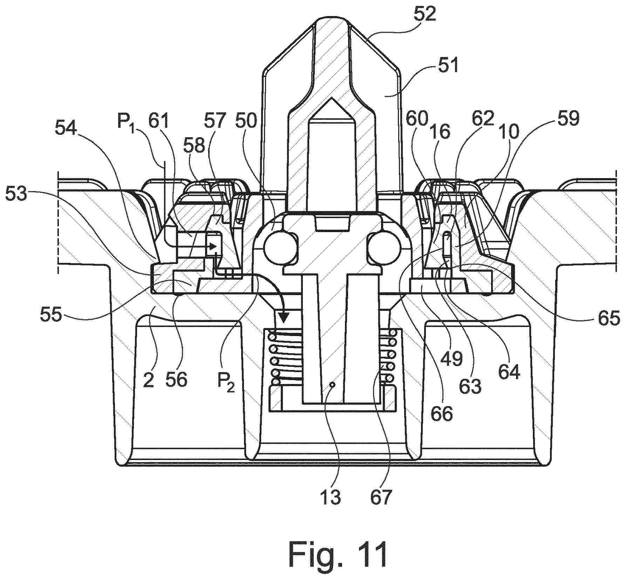

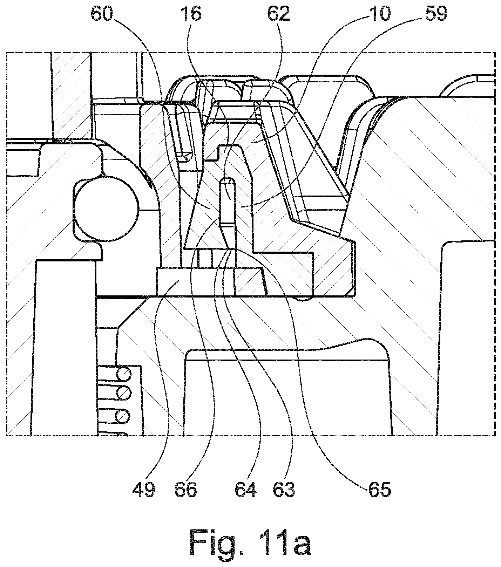

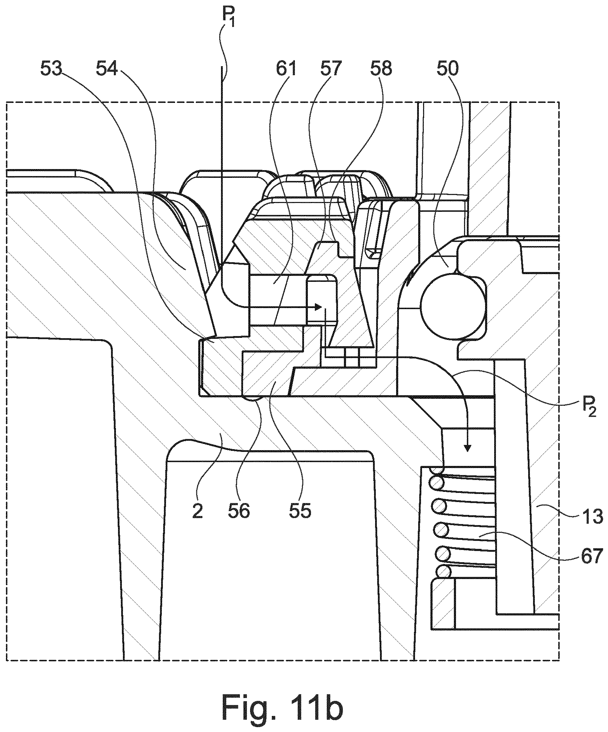

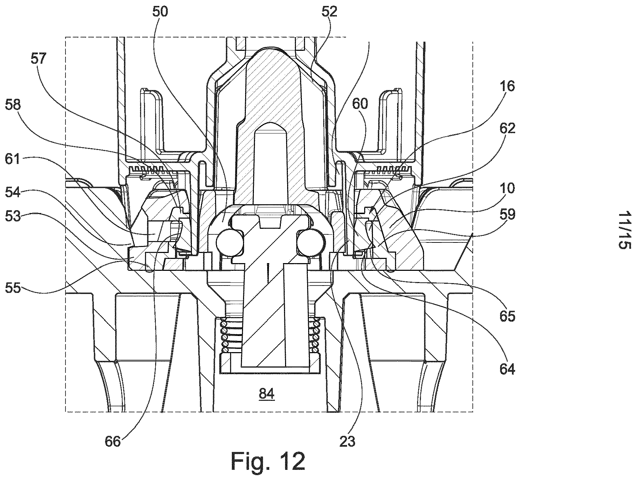

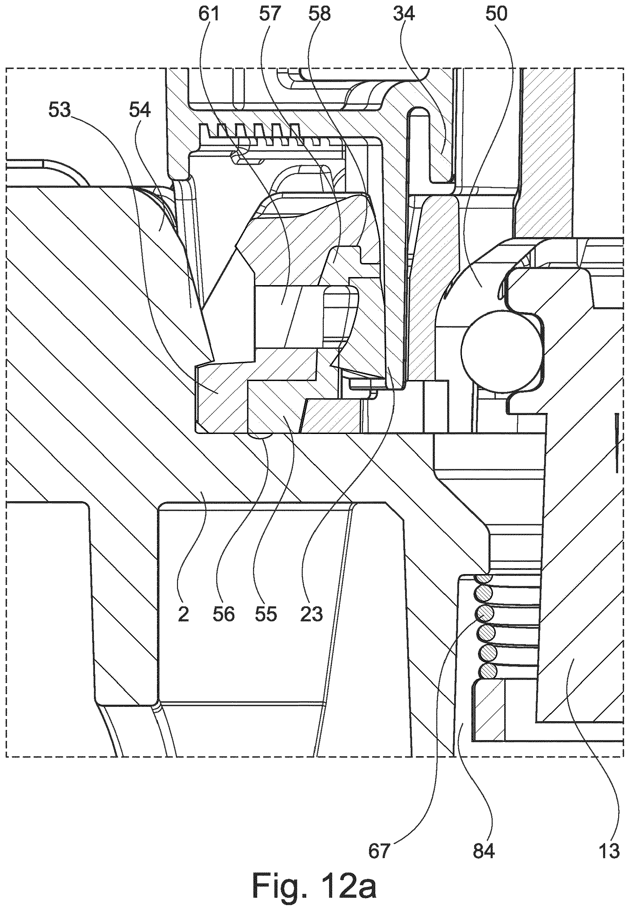

In den Fig. 11, 11a, 11b, 12 und 12a sind die zusammengebauten Bauteile des Wassertanks 1 für den Anschluss einer Filterpatrone ohne und mit Filterpatrone 22 dargestellt. Der Befestigungsring 10 ist mit einem Rastvorsprung 53 versehen, mit dem er am Tankboden 2 verrasten kann, indem er eine Bodenrippe 54 des Wassertanks hintergreift. Die Elastomerdichtung 16 hat einen Bodenabschnitt 55, der den Befestigungsring 10 untergreift und so die Elastomerdichtung 16 mit dem Befestigungsring 10 am Tankboden 2 hält.

Für die Abdichtung gegenüber dem Tankboden 2 weist die Elastomerdichtung 16 eine Dichtfläche auf, die vorliegend durch einen Dichtwulst 56 realisiert ist. Für den dichten Abschluss der Elastomerdichtung 16 gegenüber dem Befestigungsring 10 kann eine umlaufende Dichtfläche an verschiedenen Stellen vorgesehen werden. Im dargestellten Ausführungsbeispiel ist eine oben an der Elastomerdichtung 16 angeformte Ringdichtung 57 vorgesehen, die in einer Dichtnut 58 des Befestigungsrings mit diesem dichtet.

Die Elastomerdichtung 16 umfasst einen Außenring 59 und einen Innenring 60, die einstückig miteinander ausgeformt und verbunden sind. Der Außenring 59 und der Innenring 60 folgen beide in ihrer Form entlang dem Umfang dem variierenden Radius des Befestigungsrings 10, des Filteranschlussstutzens 23 und der Elastomerdichtung 16 und den dadurch gebildeten Einbuchtungen und Ausbuchtungen. Der Außenring 59 ist abgestuft und trägt die Ringdichtung 57 sowie den Dichtwulst 56. Der Außenring 59 ist weiterhin mit einer oder mehreren Bypassöffnungen 61 versehen, durch die ungefiltertes Wasser in Fließrichtung P1 in den Ringspalt 62 zwischen dem Außenring 59 und dem Innenring 60 gelangen kann. Die Bypassöffnung 61 der Elastomerdichtung 16 liegt in montiertem Zustand unmittelbar im Anschluss an eine Bypassöffnung 63 im Befestigungsring 11, die z.B. auch in den Fig. 1 und 3 zu sehen ist. Durch die Bypassöffnung 63 kann in Richtung P2 ungefiltertes Wasser aus dem Ringspalt 62 aus dem Wassertank 1 in die entsprechende Getränkemaschine fließen.

Der Innenring 60 weist an seiner Unterseite eine Dichtlippe 64 auf, der am Außenring 59 eine Dichtfläche 65 gegenüberliegt. Im entspannten Zustand der Elastomerdichtung 16 ist der Ringspalt 62 zwischen dem Außenring 59 und dem Innenring 60 unten offen, wie in Fig. 11 zu sehen ist, so dass das im Bypass geführte ungefilterte Wasser aus dem Ringspalt 62 in Fließrichtung P2 abfließen kann. In diesem Zustand ist die Innenseite 66 des Innenrings 60, die die Wassertankdichtung 17 bildet, im Verlauf nach unten nach innen abgeschrägt. Die Ausgestaltung des Bypasses ist in den Vergrößerungen gemäß den Fig. 11a und b hervorgehoben.

Beim Einsetzen einer Filterpatrone 22 mit dem Filteranschlussstutzen 23 wird die Elastomerdichtung 16 verformt, so dass die Innenseite 66 nach außen gedrückt wird und im Wesentlichen senkrecht entlang dem Filteranschlussstutzen verläuft. Dabei wird die Dichtlippe 64 auf die gegenüberliegende Dichtfläche 65 gedrückt und somit der Ringspalt 62 und damit auch der Bypass durch die Bypassöffnungen 61, 63 geschlossen. Durch die Verformung wird ein Anpressdruck erzeugt, der die Tankdichtfläche 17 an die Filterdichtfläche 28 und zugleich die Dichtlippe 64 auf die Dichtfläche 65 drückt. Dieser Zustand ist in Fig. 12 und Fig. 12a gezeigt.

Der Tankventilkörper 13 ist sowohl in Fig. 11 als auch in Fig. 12 durch einen nicht näher gezeigten Anschlag der zugehörigen Maschine gegen eine Rückstellfeder 67 in den Hohlraum 50 angehoben und so in der geöffneten Stellung, die dem eingesetzten Wassertank entspricht. Wird der Wassertank aus der Maschine entfernt, schließt der Tankventilkörper 13 unter dem Druck der Rückstellfeder 67.

Die Tankdichtfläche 18 wird durch die Innenseite 66 der Elastomerdichtung 16 gebildet und stellt zugleich eine erste Tankfixierfläche 18 dar. An dieser Seite liegt wie bereist o.a. eine durch die Filterdichtfläche 28 gebildete erste Filterfixierfläche 28 im eingesteckten Zustand der Filterpatrone 5,22 unter einem Anpressdruck an, der die Elastomerdichtung 16 so verformt, dass ein fixierender und dichtender Formschluss zustande kommt.

An der die zweite Tankfixierfläche bildenden Außenfläche 41 liegt dabei eine zweite Filterfixierfläche 68 (s. Fig. 5) an, die durch die Innenfläche des Filteranschlussstutzens 23 gebildet wird. Dieser Formschluss wird ebenfalls unter einem Anpressdruck ausgebildet. Durch die erfindungsgemäße Formgebung des Filteranschlussstutzens 23 bildet dieser eine ringförmige Wand 69 aus, die bei Bedarf federnd geweitet werden kann. Dadurch ergibt sich die Möglichkeit eines Toleranzausgleiches bei einer guten Fixierung, die durch die entsprechende Verspannung bewirkt wird. Durch die beiderseitige parallele oder zueinander geneigte Formgebung der ersten Filterfixierfläche 28 und einer zweiten Filterfixierfläche 68 bildet die dazwischen liegende ringförmige, gewellte Wand 69 des Anschlussstutzens 23 eine gewellte Ringfeder 70. Die zweite Filterfixierfläche 68 kann dabei auch als zweite Filterdichtfläche wirken.

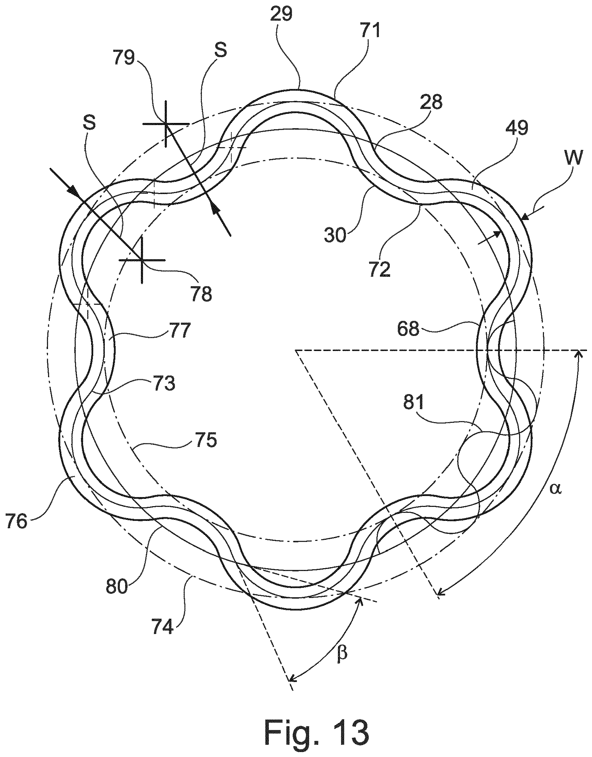

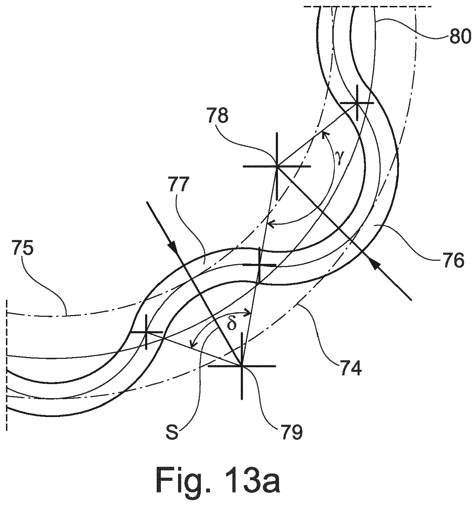

Der Filteranschlussstutzen gemäß der Stirnansicht Fig. 13 sowie der Ausschnittvergrößerung gemäß Fig. 13a zeigt die beschriebene Wellenform mit Ausbuchtungen 29 und Einbuchtungen 30. Die ringförmige Wand 69 des Filteranschlussstutzens 23 mit einer Wandstärke W weist an der Wandaußenseite 71 die erste Filterfixierfläche 28 und auf der Wandinnenseite 72 die zweite Filterfixierfläche 68 auf. Die Wandaußenseite 71 und die Wandinnenseite 72 verlaufen in der dargestellten Ansicht parallel, sind jedoch in axialer Richtung zueinander hin abgeschrägt, was weiter unten noch erläutert wird. Die Wellenform wird daher anhand einer gestrichelt dargestellten Mittellinie 73 weiter veranschaulicht.

Die Mittellinie 73 verläuft wellenförmig zwischen einem äußeren Hüllkreis 74 dessen Radius den größten Wert des variierenden Radius aufweist, und einem inneren Hüllkreis 75, dessen Radius den kleinsten Radius des variierenden Radius der Wellenform aufweist. Die Ausbuchtungen 29 und Einbuchtungen 30 der Mittelinie 73 bilden Wellenberge in der Form konvexer Kreissegmente 76 und Wellentäler in der Form konkaver Kreissegmente 77. In der dargestellten Ausführung zeigen alle Kreissegmente 76, 77 den gleichen Segmentradius S. Die Mittelpunkte 78, 79 der Kreissegmente 76, 77 liegen für die konvexen Kreissegmente 76 innerhalb des inneren Hüllkreises 75 und für die konkaven Kreissegmente 77 außerhalb des äußeren Hüllkreises 74. Die konvexen Kreissegmente 76 und die konkaven Kreissegmente 77 gehen tangential ineinander über und sind gleichmäßig über den Umfang verteilt, so dass sich eine drehsymmetrische Form ergibt. Im dargestellten Ausführungsbeispiel sind jeweils sechs konvexe Kreissegmente 76 und sechs konkave Kreissegmente 77 vorgesehen, die alternierend in einem Winkelabstand von 30° liegen, d.h. die konvexen Kreissegmente 76 liegen zueinander um einen Winkel α von 60° auseinander und die konkaven Kreissegmente 77 ebenso.

Durch die Wahl des Segmentradius und die damit einhergehende Position der zugehörigen Mittelpunkte 78, 79 verläuft die Mittelinie vergleichsweise flach gewölbt, wellenförmig um die Mittelkreislinie 80 herum. Die Mittellinie 73 schneidet die Mittelkreislinie 80 unter einem stumpfen Winkel β. Hierdurch ist die Bogenlänge der Ausbuchtungen 29 deutlich länger als die Bogenlänge der Einbuchtungen 30, wodurch der von dem Segmentbogen der Ausbuchtungen 29 überstrichene Winkel γ deutlich größer ist als der von den Einbuchtungen 30 überstrichene Winkel 5. Diese Form verbessert die Federwirkung des Filteranschlussstutzens 23.

Zum Vergleich sind in der Zeichnung noch Kreissegmente 81 dargestellt, deren Segmentmittelpunkte 82 direkt auf der Mittellinie 73 liegen. Dieser in dieser Ausführungsform nicht realisierte Verlauf weist deutlich kleinere Segmentradien und einen im Wesentlichen senkrechten Verlauf zur Mittellinie 73 auf.

Eine gute Federwirkung hat sich bei Radien und Wandstärken gezeigt, bei denen der Radius des inneren Hüllkreises 75 zwischen 5% und 15% des Radius des äußeren Hüllkreises 74 und der Radius der konvexen und/oder konkaven Kreissegmente zwischen 20% und 35% des Radius des äußeren Hüllkreises 74 liegt. Die Wandstärke W zwischen der Wandaußenseite 71 und der hierzu (bezogen auf die Betriebsposition) parallel oder geneigt verlaufenden Wandinnenseite 72 liegt bevorzugt zwischen 5% und 15% des Radius des äußeren Hüllkreises 74.

Im dargestellten Beispiel weist der äußere Hüllkreis 74 einen Radius von ca. 11 mm und der innere Hüllkreis 75 einen Radius von ca. 9,75 mm auf. Dabei beträgt der Segmentradius der konvexen und konkaven Kreissegmente ca. 3,08 mm und die Wandstärke zwischen der Wandaußenseite 71 und der hierzu parallel oder geneigt verlaufenden Wandinnenseite 72 ca. 0,9 mm.

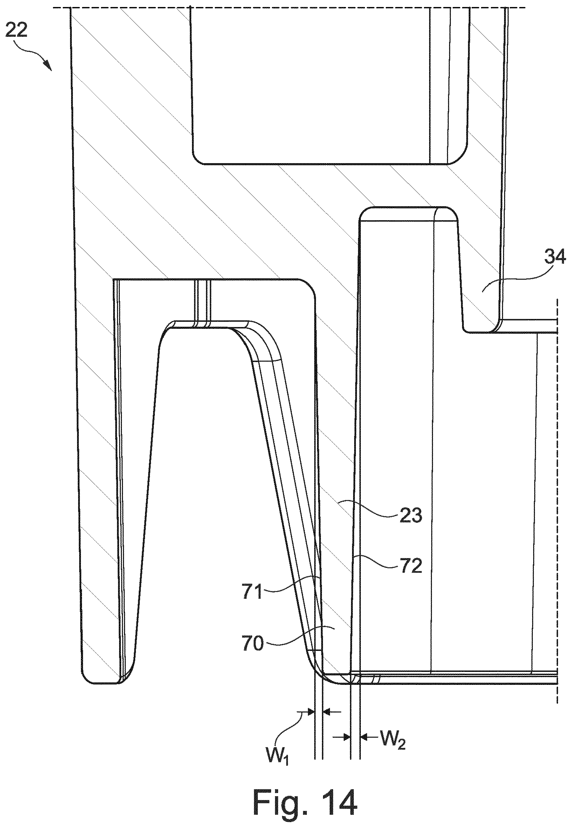

In Fig. 14 ist zu erkennen, dass die Außen 71 - und/oder die Innenwand 72 des Filteranschlussstutzens 23, die je nach Ausführungsform auch eine oder zwei Filterdichtflächen 28 bilden, gegenüber der Vertikalen um die Winkel ω1 oder ω2 abgeschrägt sind, so dass sie bezogen auf die Betriebsposition der Filterpatrone 4, 22 von oben nach unten zusammenlaufen. Diese Abschrägung oder Abschrägungen um den oder die Winkel ω1 und/oder ω2 bilden eine Einführhilfe beim Einführen des Anschlussstutzens 23 in den Ringspalt zwischen der Elastomerdichtung 16 und der Außenfläche 41 des Wassertanks 1.

### Bezugszeichenliste:

- 1: Wassertank
- 2: Tankboden
- 3: Wassertankseitenwand
- 4: Filterpatrone
- 5: Filtergehäuse
- 6: Tankanschlusselement
- 7: Filteranschluss
- 8: Innenraum
- 9: Filteranschlussstutzen
- 10: Befestigungsring
- 11: Zentrierelement
- 12: Vertiefung
- 13: Tankventilkörper
- 14: Dichtung
- 15: Pin
- 16: Elastomerdichtung
- 17: Wassertankdichtung/Ringdichtung
- 18: Tankdichtfläche
- 19: Einbuchtung
- 20: Ausbuchtung
- 21: Anschlussbereich
- 22: Filterpatrone
- 23: Filteranschlussstutzen/innerer Ring
- 24: Äußerer Ring
- 25: Vorsprung
- 26: Rücksprung
- 27: Einlasssieb
- 28: Filterdichtfläche/Außenfläche
- 29: Ausbuchtung
- 30: Einbuchtung
- 31: Führungsstruktur
- 32: Führungsnut
- 33: Kante
- 34: Polygonring
- 35: Innenwölbung
- 36: Wandung
- 37: Filtergehäuse
- 38: Dosieröffnung
- 39: Bodenplatte
- 40: Zentrierdorn
- 41: Außenfläche
- 42: Einbuchtung
- 43: Ausbuchtung
- 44: Zahn
- 45: Abstufung
- 46: Erhöhung
- 47: Lücke
- 48: Durchlassöffnung
- 49: Bodendurchlassöffnung
- 50: Hohlraum
- 51: Führungsrippe
- 52: Führungsschräge
- 53: Rastvorsprung
- 54: Bodenrippe
- 55: Bodenabschnitt
- 56: Dichtwulst
- 57: Ringdichtung
- 58: Dichtnut
- 59: Innenring
- 60: Außenring
- 61: Bypassöffnung
- 62: Ringspalt
- 63: Bypassöffnung
- 64: Dichtlippe
- 65: Dichtfläche
- 66: Innenseite
- 67: Rückstellfeder
- 68: Zweite Filterfixierfläche/Innenfläche
- 69: Wand
- 70: Ringfeder
- 71: Wandaußenseite
- 72: Wandinnenseite
- 73: Mittellinie
- 74: Äußerer Hüllkreis
- 75: Innerer Hüllkreis
- 76: Konvexes Kreissegment
- 77: Konkaves Kreissegment
- 78: Mittelpunkt
- 79: Mittelpunkt
- 80: Mittelkreislinie
- 81: Kreissegment
- 82: Segmentmittelpunkt
- 83: Wendepunkt
- 84: Tankdurchgangsöffnung

- A: Achse
- W: Wandstärke
- S: Segmentradius
- P1: Fließrichtung
- P2: Fließrichtung

## Patentansprüche

1. Wassertank (1) für eine Haushaltsmaschine mit einem Anschluss für eine Filterpatrone (22),
wobei an dem Tankboden eine ringförmige Tankdichtfläche zum dichten Anschluss der Filterpatrone (22) vorgesehen ist und die Tankdichtfläche eine Tankdurchgangsöffnung zum Durchfluss des Wassers aus der Filterpatrone (22) durch die Wandung des Tankbodens zur Haushaltsmaschine umschließt, **dadurch gekennzeichnet, dass** die Tankdichtfläche (18) entlang ihrem Umfang einen variierenden Radius gegenüber einer zentralen Achse aufweist, so dass die Tankdichtfläche (18) radiale Einbuchtungen (19) und/oder radiale Ausbuchtungen (20) umfasst, wobei die Ausbuchtungen (20) und/oder Einbuchtungen (19) einen runden Verlauf aufweisen und wobei die Einbuchtungen (19) und/oder Ausbuchtungen (20) periodisch um eine Kreislinie oszillierend ausgebildet sind.

2. Wassertank (1) für eine Haushaltsmaschine nach Anspruch 1, **dadurch gekennzeichnet, dass** der Wassertank (1) eine Filterpatrone (22) aufweist, die mit einem Filtergehäuse (37) versehen ist, dessen Wandung eine Gehäuseinnenseite von einer Gehäuseaußenseite trennt, wobei eine im Betrieb der Filterpatrone (22) gegenüber der äußeren Umgebung des Filtergehäuses (37) offene Filtereinlassöffnung (27) vorgesehen ist, wobei bezogen auf die Strömungsrichtung im Betrieb im Anschluss an die Filtereinlassöffnung (27) eine Vorrichtung zur Wasserleitung im Inneren des Filtergehäuses (37) vorgesehen ist, die wenigstens eine, wenigstens ein Filtermedium aufweisende Filterkammer umfasst und in einer Filterauslassöffnung zum Absaugen von Wasser aus der Filterpatrone (22) endet, und wobei ein Filteranschlusselement mit einem ringförmigen Filteranschlussstutzen (23) vorgesehen ist, der eine ringförmige Filterdichtfläche (28) für den dichten Anschluss der Filterpatrone (22) an einer Tankdichtfläche im Wassertank aufweist, wobei der Verlauf der Filterdichtfläche (28) entlang dem Umfang des ringförmigen Filteranschlussstutzens (23) einen variierenden Radius gegenüber einer zentralen Achse aufweist, so dass die Filterdichtfläche (28) radiale Ausbuchtungen (29) und/oder radiale Einbuchtungen (30) umfasst, wobei die Ausbuchtungen (29) und/oder Einbuchtungen (30) einen runden Verlauf aufweisen und wobei die Ausbuchtungen (29) und/oder Einbuchtungen (30) periodisch um eine Kreislinie oszillierend ausgebildet sind.

3. Wassertank (1) nach Anspruch 1 **dadurch gekennzeichnet, dass** der die Filterdichtfläche (28) aufweisende ringförmige Filteranschlussstutzen (23) des Filteranschlusselementes wenigstens im Bereich der Filterdichtfläche (28) aus einem bei Betriebstemperatur formfesten Kunststoff besteht, der insbesondere fester als ein Elastomer ist.

4. Wassertank (1) nach einem der vorgenannten Ansprüche **dadurch gekennzeichnet, dass** die Filterdichtfläche (28) eine von der zentralen Achse (A) der Filterauslassöffnung wegweisenden Außenfläche des ringförmigen Filteranschlussstutzens (23) des Filteranschlusselementes bildet.

5. Wassertank (1) nach einem der vorgenannten Ansprüche **dadurch gekennzeichnet, dass** sechs Ausbuchtungen (29) und sechs Einbuchtungen(30) entlang einer Kreislinie vorgesehen sind, die einen Durchmesser kleiner 3cm aufweist.

6. Wassertank (1) nach einem der vorgenannten Ansprüche **dadurch gekennzeichnet, dass** innerhalb des Filteranschlussstutzens (23) eine Führungsstruktur zur Führung und Aufnahme eines tankseitigen Zentrierelementes (11) vorgesehen ist.

7. Wassertank (1) nach einem der vorgenannten Ansprüche **dadurch gekennzeichnet, dass** die Führungsstruktur (31) wenigstens eine Führungsnut (32) zur Aufnahme wenigstens einer Führungsrippe (51) des tankseitigen Zentrierelementes (11) aufweist.

8. Wassertank (1) nach einem der vorgenannten Ansprüche **dadurch gekennzeichnet, dass** die Wandung der Führungsnuten (32) derart gerundet ist, dass die Nutenbreite bezogen auf die Betriebsstellung sich von unten nach oben verjüngt.

9. Wassertank (1) nach einem der vorgenannten Ansprüche **dadurch gekennzeichnet, dass** die Wandung der Führungsnuten(32) derart gerundet ist, dass die Nutenbreite sich von innen nach außen verjüngt.

10. Wassertank (1) nach einem der vorgenannten Ansprüche, **dadurch gekennzeichnet, dass** der ringförmige Filteranschlussstutzen (23) des Filteranschlusselementes eine Außen (71)- und/oder eine Innenwand (72) aufweist, die, bezogen auf die Betriebsposition der Filterpatrone, gegenüber der Vertikalen um einen Winkel ω1 und/oder ω2 abgeschrägt ist, so dass die Außenwand (71) und die Innenwand (72) der Filterpatrone von oben nach unten zusammenlaufen.

11. Wassertank (1) nach einem der vorgenannten Ansprüche **dadurch gekennzeichnet, dass** die Tankdichtfläche (18) eine zur zentralen Achse der Tankdurchgangsöffnung hinweisende Innenfläche eines ringförmigen Tankanschlusselementes bildet.

12. Wassertank (1) nach einem der vorgenannten Ansprüche **dadurch gekennzeichnet, dass** das ringförmige Tankanschlusselement eine ringförmige Elastomerdichtung (16) umfasst, in der die radialen Ausbuchtungen (19) und/oder radialen Einbuchtungen (20) vorgeformt angebracht sind.

13. Wassertank (1) nach einem der vorgenannten Ansprüche **dadurch gekennzeichnet, dass** an der Innenseite der radialen Ausbuchtungen (19) und/oder radialen Einbuchtungen (20) der Elastomerdichtung (16) die Tankdichtfläche (18) angeordnet ist.

14. Wassertank (1) nach einem der vorgenannten Ansprüche **dadurch gekennzeichnet, dass** die Tankdichtfläche (18) einen von oben nach unten zur zentralen Achse (A) hinführenden schrägen Verlauf aufweist.

15. Wassertank (1) nach einem der vorgenannten Ansprüche **dadurch gekennzeichnet, dass** der Tankboden (2) einen Befestigungsring (10) und eine in den Befestigungsring (10) eingefügte Elastomerdichtung (16) umfasst.

16. Wassertank (1) nach einem der vorgenannten Ansprüche **dadurch gekennzeichnet, dass** das ein Bypasskanal für ungefiltertes Wasser aus dem Wassertank (1) im Tankboden vorgesehen ist, der aus dem Wassertankinnenraum durch den Befestigungsring und durch die Elastomerdichtung verläuft.

17. Wassertank (1) nach einem der vorgenannten Ansprüche **dadurch gekennzeichnet, dass** die Elastomerdichtung (16) ein Verschlusselement umfasst, mittels dem der Bypasskanal verschließbar ist.

18. Wassertank (1) nach einem der vorgenannten Ansprüche **dadurch gekennzeichnet, dass** der Befestigungsring (10) ein Rastelement (53) zur Verrastung des Befestigungsrings (10) mit dem Tankboden (2) umfasst.

19. Wassertank (1) nach einem der vorgenannten Ansprüche **dadurch gekennzeichnet, dass** am Tankboden ein Zentrierelement (11) zum Einführen in die Filterpatrone (22) vorgesehen ist.

20. Wassertank (1) nach einem der vorgenannten Ansprüche **dadurch gekennzeichnet**, das oberhalb der ringförmigen Außenfläche (41) wenigstens ein nach oben stehender Zahn (44) angeordnet ist.

21. Wassertank (1) nach einem der vorgenannten Ansprüche **dadurch gekennzeichnet** Ansprüche, dass am Tankboden ein zum Tankboden gehörendes Einlegeteil vorgesehen ist, das die tankseitig zum Anschluss der Filterpatrone (22) vorgesehenen Teile umfasst.

## Claims

1. Water tank (1) for a household appliance having a connection for a filter cartridge (22),
wherein an annular tank sealing face is provided on the tank bottom for the tight connection of the filter cartridge (22) and the tank sealing face encloses a tank passage opening for the water from the filter cartridge (22) to flow through the wall of the tank bottom to the household appliance, **characterized in that** the tank sealing face (18) along its circumference has a variable radius in relation to a central axis, so that the tank sealing face (18) comprises radial concavities (19) and/or radial convexities (20), wherein the convexities (20) and/or concavities (19) have a round profile, and wherein the concavities (19) and/or convexities (20) are configured to periodically oscillate around a circular line.

2. Water tank (1) for a household appliance according to Claim 1, **characterized in that** the water tank (1) has a filter cartridge (22) which is provided with a filter housing (37), the wall of which separates a housing internal side from a housing external side, wherein a filter inlet opening (27) which in the operation of the filter cartridge (22) is open in relation to the external environment of the filter housing (37) is provided, wherein a device for water conduction which comprises at least one filter chamber having at least one filter medium and terminates in a filter outlet opening for suctioning water from the filter cartridge (22) is provided in the interior of the filter housing (37) downstream of the filter inlet opening (27) relative to the flow direction during operation, and wherein a filter connection element having an annular filter port (23) which has an annular filter sealing face (28) for the tight connection of the filter cartridge (22) to a tank sealing face in the water tank is provided, wherein the profile of the filter sealing face (28) along the circumference of the annular filter port (23) has a variable radius in relation to a central axis, so that the filter sealing face (28) comprises radial convexities (29) and/or radial concavities (30), wherein the convexities (29) and/or concavities (30) have a round profile and wherein the convexities (29) and/or concavities (30) are configured to periodically oscillate around a circular line.

3. Water tank (1) according to Claim 1, **characterized in that** the annular filter port (23) of the filter connection element, which has the filter sealing face (28), consists at least in the region of the filter sealing face (28) of a plastic which is dimensionally stable at the operating temperature and is in particular stronger than an elastomer.

4. Water tank (1) according to one of the preceding claims, **characterized in that** the filter sealing face (28) forms an external face of the annular filter port (23) of the filter connection element that points away from the central axis (A) of the filter outlet opening.

5. Water tank (1) according to one of the preceding claims, **characterized in that** six convexities (29) and six concavities (30) are provided along a circular line which has a diameter of less than 3 cm.

6. Water tank (1) according to one of the preceding claims, **characterized in that** a guide structure for guiding and receiving a tank-proximal centering element (11) is provided within the filter port (23).

7. Water tank (1) according to one of the preceding claims, **characterized in that** the guide structure (31) has at least one guide groove (32) for receiving at least one guide rib (51) of the tank-proximal centering element (11) .

8. Water tank (1) according to one of the preceding claims, **characterized in that** the wall of the guide grooves (32) is radiused in such a manner that the width of the grooves tapers from bottom to top in relation to the operating position.

9. Water tank (1) according to one of the preceding claims, **characterized in that** the wall of the guide grooves (32) is radiused in such a manner that the groove width tapers from the inside to the outside.

10. Water tank (1) according to one of the preceding claims, **characterized in that** the annular filter port (23) of the filter connection element has an external wall (71) and/or an internal wall (72) which, in relation to the operating position of the filter cartridge, is beveled at an angle ω1 and/or ω2 to the vertical so that the external wall (71) and the internal wall (72) of the filter cartridge converge from top to bottom.

11. Water tank (1) according to one of the preceding claims, **characterized in that** the tank sealing face (18) forms an internal face of an annular tank connection element that points toward the central axis of the tank passage opening.

12. Water tank (1) according to one of the preceding claims, **characterized in that** the annular tank connection element comprises an annular elastomer seal (16) in which the radial convexities (19) and/or radial concavities (20) are preformed.

13. Water tank (1) according to one of the preceding claims, **characterized in that** the tank sealing face (18) is disposed on the internal side of the radial convexities (19) and/or radial concavities (20) of the elastomer seal (16).

14. Water tank (1) according to one of the preceding claims, **characterized in that** the tank sealing face (18) has an oblique profile leading from top to bottom toward the central axis (A).

15. Water tank (1) according to one of the preceding claims, **characterized in that** the tank bottom (2) comprises a fastening ring (10) and an elastomer seal (16) inserted into the fastening ring (10).

16. Water tank (1) according to one of the preceding claims, **characterized in that** a bypass channel for unfiltered water from the water tank (1) is provided in the tank bottom, said bypass channel running from the water tank interior through the fastening ring and through the elastomer seal.

17. Water tank (1) according to one of the preceding claims, **characterized in that** the elastomer seal (16) comprises a closure element by means of which the bypass channel can be closed.

18. Water tank (1) according to one of the preceding claims, **characterized in that** the fastening ring (10) comprises a latching element (53) for latching the fastening ring (10) to the tank bottom (2).

19. Water tank (1) according to one of the preceding claims, **characterized in that** a centering element (11) for insertion into the filter cartridge (22) is provided on the tank bottom.

20. Water tank (1) according to one of the preceding claims, **characterized in that** at least one tooth (44) projecting upward is disposed above the annular external face (41).

21. Water tank (1) according to one of the preceding claims, **characterized in that** an insert which is assigned to the tank bottom and comprises the parts oriented towards the tank for connecting the filter cartridge (22) is provided on the tank bottom.

## Revendications

1. Réservoir d'eau (1) pour un appareil ménager avec un raccordement pour une cartouche filtrante (22),
une surface d'étanchéité de réservoir annulaire étant prévue sur le fond de réservoir pour le raccordement étanche de la cartouche filtrante (22) et la surface d'étanchéité de réservoir entourant une ouverture de passage de réservoir pour le passage de l'eau de la cartouche filtrante (22) à travers la paroi du fond de réservoir vers l'appareil ménager,
**caractérisé en ce que** la surface d'étanchéité de réservoir présente un rayon variable le long de sa périphérie par rapport à un axe central, de telle sorte que la surface d'étanchéité de réservoir (18) comprend des indentations radiales (19) et/ou des protubérances radiales (20), les protubérances (20) et/ou les indentations (19) présentant un tracé circulaire et les indentations (19) et/ou les protubérances (20) étant réalisées de manière à osciller périodiquement autour d'une ligne circulaire.

2. Réservoir d'eau (1) pour un appareil ménager selon la revendication 1, **caractérisé en ce que** le réservoir d'eau (1) présente une cartouche filtrante (22) qui est munie d'un boîtier de filtre (37) dont la paroi sépare un côté intérieur de boîtier d'un côté extérieur de boîtier, une ouverture d'entrée de filtre (27) ouverte par rapport à l'environnement extérieur du boîtier de filtre (37) étant prévue pendant le fonctionnement de la cartouche filtrante (22), un dispositif de conduite d'eau étant prévu à l'intérieur du boîtier de filtre (37) en raccordement à l'ouverture d'entrée de filtre (27) par rapport à la direction d'écoulement pendant le fonctionnement, qui comprend au moins une chambre de filtre présentant au moins un milieu filtrant et se termine par une ouverture de sortie de filtre pour l'aspiration de l'eau hors de la cartouche filtrante (22), et il étant prévu un élément de raccordement de filtre avec une tubulure de raccordement de filtre annulaire (23) qui présente une surface d'étanchéité de filtre annulaire (28) pour le raccordement étanche de la cartouche filtrante (22) à une surface d'étanchéité de réservoir dans le réservoir d'eau, le tracé de la surface d'étanchéité de filtre (28) le long de la périphérie de la tubulure de raccordement de filtre annulaire (23) présentant un rayon variable par rapport à un axe central, de telle sorte que la surface d'étanchéité de filtre (28) comprend des protubérances radiales (29) et/ou des indentations radiales (30), les protubérances (29) et/ou les indentations (30) présentant un tracé circulaire et les protubérances (29) et/ou les indentations (30) étant réalisées de manière à osciller périodiquement autour d'une ligne circulaire.

3. Réservoir d'eau (1) selon la revendication 1, **caractérisé en ce que** la tubulure de raccordement de filtre annulaire (23) de l'élément de raccordement de filtre, qui présente la surface d'étanchéité de filtre (28), est constituée, au moins dans la zone de la surface d'étanchéité de filtre (28), d'une matière plastique indéformable à la température de fonctionnement, qui est notamment plus solide qu'un élastomère.

4. Réservoir d'eau (1) selon l'une quelconque des revendications précédentes, **caractérisé en ce que** la surface d'étanchéité de filtre (28) forme une surface extérieure de la tubulure de raccordement de filtre annulaire (23) de l'élément de raccordement de filtre, qui est orientée à l'opposé de l'axe central (A) de l'ouverture de sortie de filtre.

5. Réservoir d'eau (1) selon l'une quelconque des revendications précédentes, **caractérisé en ce que** six protubérances (29) et six indentations (30) sont prévues le long d'une ligne circulaire présentant un diamètre inférieur à 3 cm.

6. Réservoir d'eau (1) selon l'une quelconque des revendications précédentes, **caractérisé en ce qu'**une structure de guidage est prévue à l'intérieur de la tubulure de raccordement de filtre (23) pour guider et recevoir un élément de centrage (11) côté réservoir.

7. Réservoir d'eau (1) selon l'une quelconque des revendications précédentes, **caractérisé en ce que** la structure de guidage (31) présente au moins une rainure de guidage (32) pour recevoir au moins une nervure de guidage (51) de l'élément de centrage (11) côté réservoir.

8. Réservoir d'eau (1) selon l'une quelconque des revendications précédentes, **caractérisé en ce que** la paroi des rainures de guidage (32) est arrondie de telle sorte que la largeur des rainures se rétrécit de bas en haut par rapport à la position de fonctionnement.

9. Réservoir d'eau (1) selon l'une quelconque des revendications précédentes, **caractérisé en ce que** la paroi des rainures de guidage (32) est arrondie de telle sorte que la largeur des rainures se rétrécit de l'intérieur vers l'extérieur.

10. Réservoir d'eau (1) selon l'une quelconque des revendications précédentes, **caractérisé en ce que** la tubulure de raccordement de filtre annulaire (23) de l'élément de raccordement de filtre présente une paroi extérieure (71) et/ou une paroi intérieure (72) qui, par rapport à la position de fonctionnement de la cartouche filtrante, est inclinée par rapport à la verticale d'un angle ω1 et/ou ω 2, de telle sorte que la paroi extérieure (71) et la paroi intérieure (72) de la cartouche filtrante convergent de haut en bas.

11. Réservoir d'eau (1) selon l'une quelconque des revendications précédentes, **caractérisé en ce que** la surface d'étanchéité de réservoir (18) forme une surface intérieure d'un élément de raccordement de réservoir annulaire orientée vers l'axe central de l'ouverture de passage de réservoir.

12. Réservoir d'eau (1) selon l'une quelconque des revendications précédentes, **caractérisé en ce que** l'élément de raccordement de réservoir annulaire comprend un joint d'étanchéité élastomère annulaire (16) dans lequel sont préformées les protubérances radiales (19) et/ou les indentations radiales (20).

13. Réservoir d'eau (1) selon l'une quelconque des revendications précédentes, **caractérisé en ce que** la surface d'étanchéité de réservoir (18) est agencée sur le côté intérieur des protubérances radiales (19) et/ou des indentations radiales (20) du joint d'étanchéité élastomère (16).

14. Réservoir d'eau (1) selon l'une quelconque des revendications précédentes, **caractérisé en ce que** la surface d'étanchéité de réservoir (18) présente un tracé oblique allant de haut en bas vers l'axe central (A).

15. Réservoir d'eau (1) selon l'une quelconque des revendications précédentes, **caractérisé en ce que** le fond de réservoir (2) comprend une bague de fixation (10) et un joint d'étanchéité élastomère (16) inséré dans la bague de fixation (10).

16. Réservoir d'eau (1) selon l'une quelconque des revendications précédentes, **caractérisé en ce qu'**un canal de dérivation pour l'eau non filtrée provenant du réservoir d'eau (1) est prévu dans le fond de réservoir, qui s'étend depuis l'espace intérieur du réservoir d'eau à travers la bague de fixation et à travers le joint d'étanchéité élastomère.

17. Réservoir d'eau (1) selon l'une quelconque des revendications précédentes, **caractérisé en ce que** le joint d'étanchéité élastomère (16) comprend un élément de fermeture au moyen duquel le canal de dérivation peut être fermé.

18. Réservoir d'eau (1) selon l'une quelconque des revendications précédentes, **caractérisé en ce que** la bague de fixation (10) comprend un élément d'encliquetage (53) pour encliqueter la bague de fixation (10) avec le fond de réservoir (2).

19. Réservoir d'eau (1) selon l'une quelconque des revendications précédentes, **caractérisé en ce qu'**un élément de centrage (11) est prévu sur le fond de réservoir pour l'introduction dans la cartouche filtrante (22) .

20. Réservoir d'eau (1) selon l'une quelconque des revendications précédentes, **caractérisé en ce qu'**au moins une dent (44) dressée vers le haut est agencée au-dessus de la surface extérieure annulaire (41).

21. Réservoir d'eau (1) selon l'une quelconque des revendications précédentes, **caractérisé en ce qu'**il est prévu sur le fond de réservoir une pièce d'insertion appartenant au fond de réservoir, qui comprend les pièces prévues côté réservoir pour le raccordement de la cartouche filtrante (22).
